## Europäisches Patentamt

## European Patent Office

## Office européen des brevets

(11) Veröffentlichungsnummer: **0 043 431**
**B1**

(12) **EUROPÄISCHE PATENTSCHRIFT**

(45) Veröffentlichungstag der Patentschrift:
28.01.87

(51) Int. Cl.⁴: **H 04 Q 9/00,** G 01 M 3/00,
F 17 D 5/06

(21) Anmeldenummer: **81103840.5**

(22) Anmeldetag: **19.05.81**

(54) Messanordnung mit einer Vielzahl von miteinander durch ein Kabel verbundenen Messstellen.

(30) Priorität: **08.07.80 DE 3025837**

(43) Veröffentlichungstag der Anmeldung:
**13.01.82 Patentblatt 82/2**

(45) Bekanntmachung des Hinweises auf die Patenterteilung:
**28.01.87 Patentblatt 87/5**

(84) Benannte Vertragsstaaten:
**AT CH FR GB IT LI NL SE**

(56) Entgegenhaltungen:
**CH - A - 469 420
DE - A - 2 644 720
DE - A - 2 800 185
GB - A - 1 105 973
GB - A - 1 360 980
US - A - 4 162 484**

(73) Patentinhaber: **MTC Messtechnik und Optoelektronik AG, Avenue Jean Jacques Rousseau 5, CH-2000 Neuchâtel (CH)**

(72) Erfinder: **Chaborski, Hoiko, Dipl.-Ing., Englschalkinger Strasse 239E, D-8000 München 81 (DE)**
Erfinder: **Mehnert, Walter, Dr. Dipl.-Ing., Grillparzerstrasse 6, D-8012 Ottobrunn (DE)**

(74) Vertreter: **Strasser, Wolfgang, Dipl.-Phys et ai, Patentanwälte Strohschänk, Uri & Strasser innere Wiener Strasse 8, D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Messanordnung der im Oberbegriff des Anspruchs 1 beschriebenen Art.

Aus der DE-OS 2 800 185 ist es bekannt, die Messstellen einer solchen Messanordnung beispielsweise mit Thermistoren als Messfühler zu bestücken und ein so ausgerüstetes Messkabel längs einer Fernwärmeleitung zu verlegen, um diese Leitung auf das Auftreten von Wärmeverluste verursachenden Leckstellen zu überwachen und gegebenenfalls derartige Leckstellen genau orten zu können. Dies geschieht dadurch, dass in der Steuer- und Messzentrale Änderungen des Temperaturgradienten zwischen zwei benachbarten Messstellen erfasst und zur Fehlererkennung ausgewertet werden.

Der Absolutwert der an der jeweiligen Messstelle beim einzelnen Messvorgang herrschenden Temperatur ist dabei von untergeordneter Bedeutung, da er sich durch zeit- und witterungsbedingte Einflüsse, beispielsweise wechselnde Sonneneinstrahlung häufig ändert. Man geht daher so vor, dass man die jeweils an den Messstellen der Reihe nach neu gewonnenen Messwerte mit diesen Messstellen zugeordneten sogenannten Sollwerten vergleicht, die dadurch an die sich global ändernden Umgebungsbedingungen angepasst werden, dass die Messstellen immer wieder durchgemessen und die sich ergebenden Messwerte dann als neue Sollwerte für den nächsten Zeitraum gespeichert werden, wenn die erkannten Abweichungen von den alten Sollwerten als Auswirkung einer «globalen», d.h. grosse Abschnitte der Fernwärmeleitung betreffenden Temperaturänderung erkannt werden.

Weitere Anwendungsgebiete für erfindungsgemässe Messanordnungen ergeben sich, wenn man statt der Thermistoren andere Bauelemente oder Schaltungen in jede Messstelle einsetzt, die ihren elektrischen Widerstand beispielsweise in Abhängigkeit vom Umgebungsdruck, der Umgebungshelligkeit, der Umgebungsfeuchtigkeit usw. ändern. Auch ist es keineswegs erforderlich, dass alle Messstellen mit gleichen Messfühlern ausgestattet sind. So lässt sich beispielsweise in einem viele Räume umfassenden Gebäudekomplex, in den eine erfindungsgemässe Messanordnung eingebaut wird, in jedem Raum die Temperatur, die Luftfeuchtigkeit, der Betriebszustand der Beleuchtung, die Entwicklung von Rauch usw. überwachen, wobei dann in jedem der Räume für jeden dieser physikalischen Umgebungsparameter eine mit einem entsprechenden Messfühler ausgerüstete Messstelle vorgesehen ist. Alle diese Messstellen können durch das Kabel der Messanordnung seriell miteinander verbunden sein und von der Steuer- und Messzentrale her der Reihe nach abgefragt werden.

In vielen Fällen kann dabei die Vorgabe der zum Vergleich mit den aktuellen Messwerten herangezogenen Sollwerte auch auf andere Weise erfolgen, als dies oben für die Temperatur beschrieben wurde.

So wird man z.B. für die Überprüfung des Betriebszustandes der Raumbeleuchtung während der Tages- bzw. Arbeitsstunden einen einer grossen Helligkeit und während der Nachstunden einen einer niederen Helligkeit entsprechenden Sollwert vorgeben, um eine Anzeige dafür zu erhalten, wo vergessen wurde, nachts das Licht auszuschalten.

Für die Erkennung von Rauchentwicklung wird man dagegen vor einem lichtempfindlichen Messfühler eine Lichtquelle konstanter Helligkeit anordnen und einen einzigen festen Sollwert vorgeben, dessen Über- bzw. Unterschreiten eine unzulässige Verringerung der Lufttransparenz in dem betreffenden Raum signalisiert.

Bei der bekannten Messanordnung besteht die Steuerschaltung einer jeden Messstelle im wesentlichen aus zwei Monoflops, von denen das erste jeweils durch den Ausgangsimpuls des zweiten Monoflops der vorausgehenden Messstelle getriggert wird, worauf es einen Ausgangsimpuls vorgegebener zeitlicher Länge abgibt, der die den Messfühler dieser Messstelle mit einer Stromeinprägeleitung verbindende Schalteranordnung für die Dauer seines Anliegens am Steuereingang dieser Schalteranordnung schliesst und durch seine Endflanke das zweite Monoflop der betreffenden Messstelle triggert, das durch das kurzzeitige Schliessen eines zweiten Schalters der Steuer- und Messzentrale eine die Beendigung des Messvorgangs anzeigende Rückmeldung liefert und dann das erste Monoflop der nächsten Messstelle triggert.

Die Monoflops sämtlicher Messstellen der bekannten Messanordnung sind also zu einer einzigen langen Kette zusammengeschlossen. Die Steuer- und Messzentrale kann lediglich das erste Monoflop der ersten Messstelle anstossen, worauf sich dieser Triggerimpuls lauffeuerartig durch die Monoflopkette hindurchbewegt, ohne dass die Zentrale eine weitere Möglichkeit zur Einflussnahme hätte.

Durch dieses der Kontrolle der Steuer- und Messzentrale entzogene Weiterschalten von einer Messstelle auf die nächste, können sich in der Praxis eine ganze Reihe von Problemen ergeben. So muss z.B. dann, wenn an einer bestimmten Messstelle ein aus dem Rahmen fallender Messwert überprüft werden soll, die gesamte Monoflopkette erneut durchgetaktet werden, um von dieser einen Messstelle einen weiteren Messwert zu erhalten.

Ein weiteres Problem, das sich aus der fehlenden Zugriffsmöglichkeit der Steuer- und Messzentrale ergibt, besteht darin, dass es ausserordentlich schwierig ist, das bekannte Messsystem zu verzweigen. Das zweite Monoflop der einer solchen Verzweigung vorausgehenden Messstelle würde ja die ersten Monoflops der in jedem Zweig folgenden nächsten Messstellen nahezu gleichzeitig anstossen, so dass mehrere Messwerte gleichzeitig zur Zentrale zurückgeführt werden müssten. Bei einer einzigen Y-förmigen Verzweigung sind die hierbei auftretenden Schwierigkeiten zwar noch lösbar, nicht mehr aber bei einem beliebig stark und beliebig oft verzweigten System.

Schliesslich wirkt sich die mangelnde Möglichkeit der Steuer- und Messzentrale auf den Ablauf der Messung an den einzelnen Messstellen Einfluss zu nehmen dann besonders nachteilig aus, wenn, wie dies vorzugsweise geschieht, die Schalteranordnungen der Messstellen von kontaktlosen Halbleiterschaltern, beispielsweise Feldeffekt-Transistoren gebildet werden. Bekanntlich können solche «Analogschalter» durch das Anlegen eines geeigneten impulsförmigen Steuersignals an ihren Steuereingang zwischen einem nahezu unendlich hohem Widerstandswert zwischen ihren Quellen-Senken-Anschlüssen («Schalter geöffnet») und einem Widerstandswert nahe Null («Schalter geschlossen») hin- und hergeschaltet werden. Während der Anstiegs- und Abfallzeiten des Steuersignalimpulses erfolgt dabei jedoch ein kontinuierlicher Übergang zwischen den beiden Grenz-Widerstandswerten, so dass eine Messung des Widerstandes eines mit einem solchen Schalter in Reihe liegenden Messfühlers nur im eingeschwungenen Zustand, d.h. bei völlig geschlossenem Schalter nicht aber während der Anstiegs- bzw. Abfallzeiten der Steuerimpulsflanken sinnvoll ist. Da die Steuerimpulse bei dem bekannten System jeweils von dem ersten Monoflop der betreffenden Messstelle erzeugt werden, ist es sehr schwierig, die Steuer- und Messzentrale so arbeiten zu lassen, dass Messwerte immer nur im eingeschwungenen Zustand erfasst werden.

Zwar ist aus der US-A-4 162 484 ein Daten-Sammelsystem bekannt, bei dem eine Vielzahl von Verbrauchszählern miteinander und mit einer Steuer- und Messzentrale durch ein Kabel verbunden sind und der Zählerstand eines jeden Zählers von der Steuer- und Messzentrale her abgefragt werden kann. Dabei ist die gesamte Anordnung in einzelne Abschnitte unterteilt, die jeweils eine Vielzahl von Verbrauchszählern umfassen und denen jeweils eine Anwahlschaltung zugeordnet ist. Zum Abruf des Zählerstandes eines bestimmten Verbrauchszählers sendet die Steuer- und Messzentrale nacheinander zwei verschiedene Code-Signale aus, von denen das erste dazu dient, diejenige Anwahlschaltung zu aktivieren, in deren Abschnitt sich der gewünschte Zähler befindet. Diese Aktivierung hat zur Folge, dass das zweite Code-Signal nur an die Steuerschaltungen derjenigen Zähler gelangt, die sich in dem betreffenden Abschnitt befinden. Jede dieser Steuerschaltungen umfasst einen Dekoder, mit dessen Hilfe das zweite Code-Signal dekodiert und für den angewählten Zähler die Übertragung der in ihm enthaltenen Information an die Steuer- und Messzentrale durchgeführt wird. Dieses System erlaubt zwar einen völlig wahlfreien Zugriff der Steuer- und Messzentrale zu jedem einzelnen Verbrauchszähler, doch ist der verkabelungs- und schaltungstechnische Aufwand vergleichsweise hoch, da einerseits die einzelnen Abschnitte des Systems nicht ohne weiteres in Reihenschaltung durch ein und dasselbe Kabel miteinander verbunden werden können und anderseits an jedem Verbrauchszähler ein Dekoder vorgesehen werden muss, dessen Dekodier-Kapazität gleich der Anzahl der in einem Systemabschnitt zusammengefassten Verbrauchszähler ist. Will man für die Übertragung des zweiten Code-Signales nicht eine übermässig grosse Anzahl von Kabel-Adern benutzen, muss überdies jedem Dekoder ein Serien/Parallel-Wandler zugeordnet sein.

Für eine Messanordnung der eingangs genannten Art, bei der bis zu 100 000 Messstellen in das Kabel integriert und mit diesem beispielsweise auch im Erdboden verlegbar sein sollen, so dass also auch die gesamte Energieversorgung aller Messstellen durch das Kabel selbst erfolgt, ist ein solcher schaltungstechnischer Aufwand nicht mehr tragbar.

Demgegenüber liegt der Erfindung die Aufgabe zugrunde, eine Messanordnung der eingangs genannten Art so weiterzubilden, dass bei einem möglichst geringen schaltungs- und verkabelungstechnischen Aufwand der Steuer- und Messzentrale eine verbesserte Möglichkeit der Einflussnahme auf die an den Messstellen nacheinander ablaufenden Messvorgänge eröffnet wird.

Zur Lösung dieser Aufgabe sieht die Erfindung die im Anspruch 1 niedergelegten Merkmale vor.

Dadurch, dass gemäss der Erfindung die ganze Messanordnung in von der Zentrale einzeln anwählbare Abschnitte unterteilt wird, können beliebig verzweigte und vermaschte Systeme dadurch aufgebaut werden, dass man jeden von einem Verzweigungspunkt abzweigenden Leitungsabschnitt mit einer Anwahlschaltung ausstattet, die von der Zentrale durch das Aussenden der zugehörigen Adresse immer dann aktiviert werden kann, wenn die Abfrage der Messstellen eines zuvor aktivierten Leitungsabschnittes beendet oder abgebrochen worden ist. Zwar bleibt innerhalb eines jeden Leitungsabschnittes die streng lineare Anordnung erhalten, so dass beispielsweise in einem bestimmten Abschnitt die n-te Messstelle erst dann abgefragt werden kann, wenn alle im Abschnitt vorausgehenden Messstellen abgefragt worden sind. Dennoch wird die Zugriffsmöglichkeit zu einer bestimmten Messstelle beispielsweise zur Überprüfung eines kurz zuvor gewonnenen Messwertes wesentlich verbessert, da beispielsweise unmittelbar nach Erhalt des zu überprüfenden Messwertes das weitere Durchtakten des betreffenden Leitungsabschnittes abgebrochen und dieser Leitungsabschnitt nochmals von vorne bis zu der fraglichen Messstelle hin durchgetaktet werden kann. Da das Durchtakten der einzelnen Messstellen von der Steuer- und Messzentrale her geschieht, ist der Zeitraum, während dessen jeweils die Schalteranordnung einer Messstelle geschlossen ist, genau definiert und der Steuer- und Messzentrale bekannt, so dass auf einfache Weise dafür gesorgt werden kann, dass die Messwerterfassung immer nur im eingeschwungenen Zustand erfolgt.

Ein besonderer Vorteil der erfindungsgemässen Anordnung ist darin zu sehen, dass in den einzelnen Messstellen keine Monoflops mehr verwendet werden müssen. Da eine erfindungsgemässe Messanordnung einige 10- bis 10 000 Messstellen umfassen kann, müssen an die Zuverlässigkeit der den Messstellentakt weitergebenden Bauelemente ausserordentlich hohe Anforderungen gestellt werden. Bei der bekannten Vorrichtung waren dies die beschriebenen Monoflops, die zwar als integrierte Bauelemente mit hoher Zuverlässigkeit im Handel verfügbar sind, zur Erzielung einer brauchbaren Ausgangsimpulslänge aber immer mit einem externen RC-Glied beschaltet werden müssen. Kondensatoren sind aber bekanntlich Bauelemente, die nicht nur breiten Fertigungstoleranzen sondern auch starken Alterungserscheinungen unterworfen sind, wenn man nicht sehr teure Bauelemente verwenden will. Durch den Wegfall dieser Monoflops ergibt sich also eine wesentliche Steigerung der Zuverlässigkeit bei gleichzeitiger Verringerung des Kostenfaktors für die gesamte Messanordnung.

Weitere vorteilhafte Ausgestaltungsmöglichkeiten der erfindungsgemässen Messanordnung sind in den Unteransprüchen niedergelegt.

Die Erfindung wird im folgenden anhand von Ausführungsbeispielen unter Bezugnahme auf die Zeichnung näher erläutert. In dieser zeigt:

Fig. 1 einen Gesamtüberblick über eine erfindungsgemässe Messanordnung,

Fig. 2 einen Leitungsabschnitt mit Einzelheiten der Anwahlschaltung und der einzelnen Messstellen,

Fig. 3 eine bevorzugte Ausführungsform für eine Anwahlschaltung,

Fig. 4 eine bevorzugte, besonders zuverlässige Ausführungsform einer Messstellen-Schaltung,

Fig. 5 in schematischer Weise eine hierarchische Schalteranordnung,

Fig. 6 die in einer Messstelle zusammengefassten Ansteuerungsschaltungen für hierarchisch angeordnete Schalter,

Fig. 7 ein Prinzipschaltbild der erfindungsgemässen Mess- und Steuerzentrale,

Fig. 8 den zur Stromeinprägung und Messwertbildung dienenden Teil der Steuer- und Messzentrale,

Fig. 9 den zur Erzeugung der digitalen Steuersignale für die Anwahlschaltungen und Messstellen dienenden Teil der Steuer- und Messzentrale, und

Fig. 10 ein die Arbeitsweise der in Fig. 9 dargestellten Schaltung erläuterndes Impulsdiagramm.

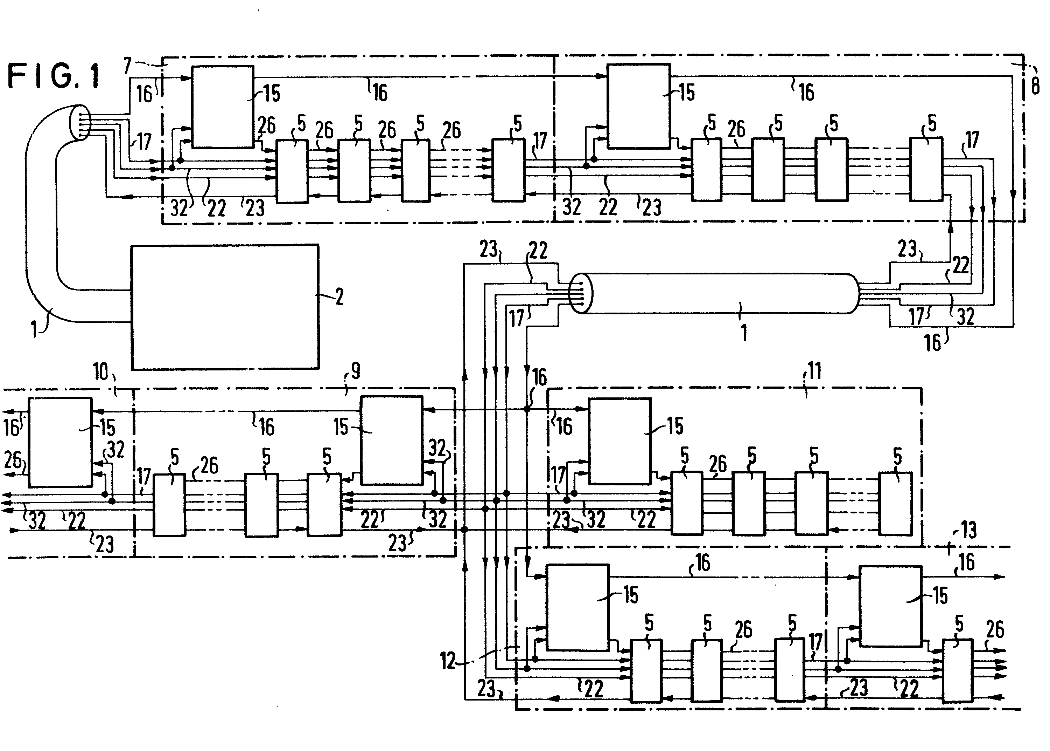

In Fig. 1 ist eine schematische Übersichtsdarstellung einer erfindungsgemässen Messanordnung wiedergegeben, bei der ein vieladriges Kabel 1, das von einer Steuer- und Messzentrale 2 ausgeht, eine Vielzahl von Messstellen 5 miteinander verbindet.

Das Kabel 1 ist in eine Vielzahl von Abschnitten unterteilt, von denen in Fig. 1 nur einige, nämlich die Abschnitte 7 bis 13 dargestellt sind.

Wie man der Fig. 1 entnimmt, müssen diese Abschnitte nicht linear hintereinander angeordnet sein; aufgrund der erfindungsgemässen Ausbildung der gesamten Messanordnung sind vielmehr ohne weiteres Verzweigungen möglich, die Y-förmig, kreuzförmig oder auch sternförmig ausgebildet sein können.

In Fig. 1 ist eine kreuzförmige Verzweigung dargestellt, die von den Leitungsabschnitten 8, 9, 11 und 12 gebildet wird.

An die Leitungsabschnitte 9 und 12 schliesst sich dann jeweils ein weiterer Leitungsabschnitt 10 bzw. 13 an, während der Leitungsabschnitt 11 eine nur einen einzigen Abschnitt umfasende Stichleitung symbolisiert. Vorteilhafterweise werden Verzweigungspunkte des Kabels 1 immer so gelegt, dass sie zwischen Leitungsabschnitt-Grenzen fallen, wie dies auch in Fig. 1 wiedergegeben ist.

Jedem Leitungsabschnitt ist eine Anwahlschaltung 15 zugeordnet, die von der Steuer- und Messzentrale 2 her dadurch aktiviert werden kann, dass die Steuer- und Messzentrale 2 auf einer als Adressenleitung verwendeten Ader 16 des Kabels 1 einen bestimmten Code aussendet, der allen Anwahlschaltungen 15 zugeführt und von einer in ihnen jeweils vorgesehenen Empfangs- und Dekodiereinheit mit einer gespeicherten Adresse verglichen wird. Diejenige Anwahlschaltung 15, deren Adresse mit dem von der Steuer- und Messzentrale 2 momentan ausgesandten Adressen-Code übereinstimmt, lässt dann ein auf der als Messstellen-Taktleitung dienenden Ader 17 von der Steuer- und Messzentrale 2 allen Messstellen 5 zugeführtes Messstellen-Taktsignal nur für die ihr zugeordneten, d.h. in ihrem Leitungsabschnitt befindlichen Messstellen wirksam werden, während alle übrigen Messstellen zu diesem Zeitpunkt auf das Messstellen-Taktsignal nicht reagieren, weil ihre jeweilige Anwahlschaltung zuvor nicht aktiviert worden ist.

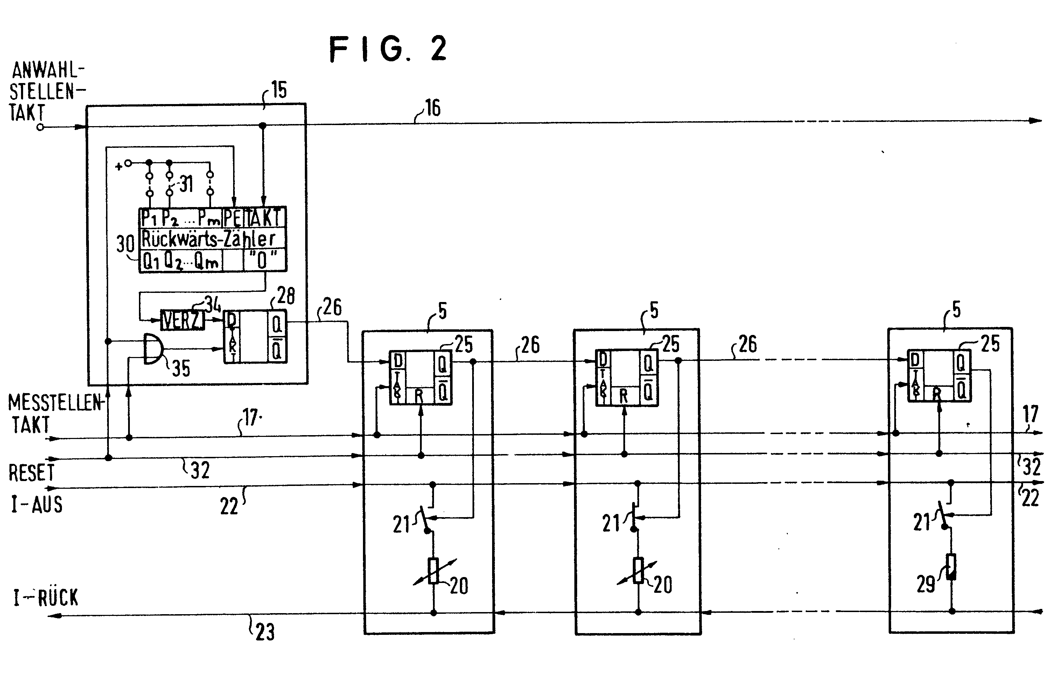

Wie man insbesondere der Fig. 2 entnimmt, umfasst jede Messstelle 5 einen Messfühler 20, der im dargestellten Ausführungsbeispiel als Thermistor, d.h. also als ein seinen elektrischen Widerstandswert in Abhängigkeit von der Umgebungstemperatur änderndes Bauelement ausgebildet ist, im allgemeinsten Fall aber von einem Bauelement oder einer Schaltungsanordnung gebildet werden kann, das bzw. die ihren elektrischen Widerstand in Abhängigkeit von irgendeinem physikalischen Umgebungsparameter, beispielsweise von der Feuchtigkeit, von der Helligkeit, vom Druck oder dergleichen ändert.

Jeder dieser Messfühler 20 ist über eine in Fig. 2 vereinfacht als mechanischer Unterbrecherschalter dargestellte Schalteranordnung 21 mit einer Ader 22 des Kabels 1 verbunden, in die von der Steuer- und Messzentrale her ein konstanter Strom vorgegebener Grösse eingeprägt wird.

Mit seinem anderen Ende ist jeder der Messfühler 20 mit einer weiteren Ader 23 des Kabels 1 verbunden, durch die der bei geschlossenem Schalter 21 durch ihn hindurchfliessende eingeprägte Strom zur Steuer- und Messzentrale zurückgeführt wird.

Die Steuerung der Schalteranordnung 21 einer jeden Messstelle 5 erfolgt durch eine in der Messstelle vorgesehene Steuerschaltung, die in dem dargestellten Ausführungsbeispiel jeweils durch ein D-Flip-Flop 25 gebildet wird, dessen Q-Ausgang mit dem Steuereingang der Schalteranordnung 21 verbunden ist.

Liegt an diesem Q-Ausgang eine logische 1 an, so wird der Schalter 21 im geschlossenen Zustand gehalten, während er beim Anliegen einer logischen Null geöffnet ist.

Die D-Flip-Flops 25 der zu einem Leitungsabschnitt gehörenden Messstellen 5 sind dadurch in Art eines Schieberegisters zusammengeschaltet, dass der Q-Ausgang des D-Flip-Flops einer im Leitungsabschnitt jeweils weiter vorn, d.h. näher bei der Anwahlschaltung 15 liegenden Messstelle 5 vermittels des zugehörigen Teilstücks einer Ader 26 des Kabels 1 mit dem D-Eingang des D-Flip-Flops 25 der unmittelbar nachfolgenden, d.h. von der Anwahlschaltung 15 weiter entfernt liegenden Messstelle 5 verbunden ist.

Der Q-Ausgang des D-Flip-Flops 25 der von der Anwahlschaltung 15 am weitesten entfernt liegenden, d.h. den betreffenden Kabelabschnitt abschliessenden Messstelle 5 steuert dann nur noch den zu dieser Messstelle gehörenden Schalter 21 ohne mit dem D-Flip-Flop 25 einer anderen Messstelle verbunden zu sein.

Der D-Eingang des D-Flip-Flops 25 der ersten, d.h. der Anwahlschaltung 15 des betreffenden Leitungsabschnittes am nächsten liegenden Messstelle 5 ist über einen weiteren Abschnitt der Ader 26 mit dem Q-Ausgang eines in der Anwahlschaltung 15 vorgesehenen D-Flip-Flops 28 verbunden, das somit die erste Stufe des im übrigen von den D-Flip-Flops 25 gebildeten Schieberegisters bildet.

Durch die im folgenden noch genauer zu beschreibenden übrigen Schaltungsbestandteile der Anwahlschaltung 15 wird dieses D-Flip-Flop 28 so angesteuert, dass nach Aktivierung der Anwahlschaltung 15 durch den von der Steuer- und Messzentrale 2 ausgesandten Adressen-Code an seinem Q-Ausgang kurzzeitig eine logische 1 erscheint, die dann von dem auf der Messstellen-Taktleitung 17 erscheinenden Messstellentakt durch das von den Messstellen-D-Flip-Flops 25 gebildete Schieberegister weitergeschoben wird. Das Schieberegister wird also in Art eines Johnson-Zählers betrieben, d.h. es liegt immer nur an einem seiner Q-Ausgänge eine logische 1 an, während alle anderen Q-Ausgänge auf logisch Null liegen.

Somit werden also der Reihe nach die Schalter 21 geschlossen und wieder geöffnet, so dass der über die Leitung 22 eingeprägte Konstantstrom immer nur durch einen Messfühler 20 fliessen kann. Der hierdurch erzeugte Spannungsabfall, der aufgrund des zu dem zu überwachenden Umgebungsparameter proportionalen Widerstandswertes dieses Messfühlers 20 ein direktes Mass für die Grösse dieses Umgebungsparameters darstellt, kann in der Steuer- und Messzentrale 2 zwischen den Leitungen 22 und 23 gemessen und unter eindeutiger Zuordnung zu der jeweils gerade abgefragten Messstelle 5 weiterverarbeitet werden.

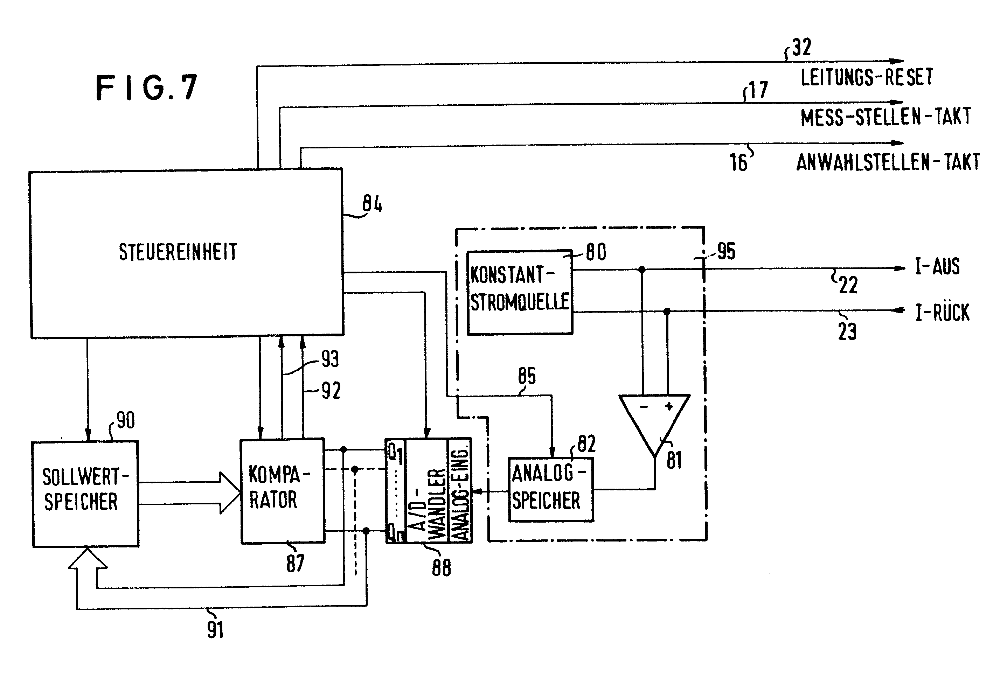

Ist nach Aktivierung einer Anwahlstelle 15 die immer nur einen der Schalter 21 des betreffenden Leitungsabschnittes schliessende logische 1 bis zur letzten Stufe des von den D-Flip-Flops 25 gebildeten Schieberegisters durchgeschoben, so muss die Steuer- und Messzentrale 2 eine Information darüber erhalten, dass der betreffende Leitungsabschnitt fertig abgefragt ist und der Adressen-Code für die Anwahlstelle 15 eines anderen Leitungsabschnittes erzeugt und ausgegeben werden muss. Die das Erreichen eines Leitungsabschnitts-Endes kennzeichnende Information kann beispielsweise dadurch gewonnen werden, dass bei der letzten, d.h. von der Anwahlstelle 15 am weitesten entfernt liegenden Messstelle 5 der einen veränderlichen elektrischen Widerstand aufweisende Messfühler 20 durch einen von einem einzelnen Bauelement oder einer Schaltung gebildeten Festwiderstand 29 ersetzt ist, dessen Widerstandswert auch bei sich sehr stark ändernden physikalischen Umgebungsparametern nur sehr wenig variiert. In dem dargestellten, ein Temperaturmesskabel betreffenden Beispiel ist dieser Festwiderstand ein Metallschichtwiderstand, der bekanntlich einen ausserordentlich kleinen Widerstands-Temperatur-Koeffizienten besitzt. Der Wert des Festwiderstandes ist so gewählt, dass er deutlich ausserhalb des Widerstandsbereiches liegt, in dem sich die Widerstandswerte der Messfühler 20 bewegen, wenn sich der zu überwachende physikalische Umgebungsparameter innerhalb der zu erwartenden Grenzen verändert. Auf diese Weise wird beim Schliessen des zugehörigen Schalters 21 für die Steuer- und Messzentrale 2 zwischen den Leitungen 22 und 23 ein eindeutig aus dem zu erwartenden Bereich herausfallender Spannungswert erzeugt, der von einem in Fig. 7 dargestellten Komparator erkannt werden kann. Das Ausgangssignal dieses Komparators 87 kann dann dazu verwendet werden, die Steuer- und Messzentrale 2 zum Weiterschalten auf einen anderen Leitungsabschnitt zu veranlassen.

Die eben geschilderte Anordnung ist vor allem dann von Vorteil, wenn aus irgendwelchen Gründen Leitungsabschnitte mit unterschiedlicher Länge, d.h. unterschiedlicher Messstellenanzahl von ein und derselben Steuer- und Messzentrale 2 betrieben werden müssen. Es ist dann nicht erforderlich, in der Steuer- und Messzentrale 2 für jeden Leitungsabschnitt die Anzahl der in ihm enthaltenen Messstellen abzuspeichern und jedesmal dann abzurufen, wenn der Leitungsabschnitt angewählt worden ist.

Sind alle Leitungsabschnitte gleich lang, kann auch die jeweils letzte Messstelle mit einem Messfühler 20 ausgestattet werden, weil es dann genügt, in der Steuer- und Messzentrale 2 die erzeugten Messstellen-Taktimpulse abzuzählen und nach Erreichen des für alle Leitungsabschnitte gleichen Maximalwertes einen neuen Leitungsabschnitt anzuwählen.

Die in Fig. 2 in vereinfachter Form dargestellte Anwahlstelle 15 enthält neben dem D-Flip-Flop 28 als wesentlichsten Bestandteil einen programmierbaren Rückwärtszähler 30, der als Empfangs- und Dekodiereinheit für die von der Steuer- und Messzentrale 2 ausgesandten Adressen-Code dient. Dieser Rückwärtszähler 30 besitzt Programmiereingänge $P_1$ bis $P_m$, die durch Lötbrücken-Verbindungen 31 entweder mit einer positiven Spannungsquelle verbunden, d.h. auf eine logische 1 gelegt oder auf logisch Null gelassen werden können. Diese Lötbrücken-Verbindungen sind für jede Anwahlstelle 15 in anderer Weise geschlossen bzw. offengelassen, so dass jeder dieser Rückwärtszähler 30 auf einen individuellen, in der ganzen Messanordnung nur ein einziges Mal vorkommenden Zahlenwert programmiert ist.

Immer dann, wenn die Rückwärtszähler 30 an ihrem PE-Eingang einen Steuerimpuls erhalten, der ihnen im vorliegenden Fall von der Steuer- und Messzentrale 2 über eine als Reset-Leitung dienende Ader 32 des Kabels 1 zugeführt wird, wird in die Rückwärtszähler 30 der durch die Lötbrücken 31 vorgegebene Zahlenwert eingeschrieben, von dem aus beginnend sie dann abwärts zählen, wenn die Steuer- und Messzentrale 2 über die Adressenleitung 16 Taktsignale abgibt.

Zur Anwahl einer bestimmten Anwahlschaltung 15 erzeugt die Steuer- und Messzentrale 2 also immer eine bestimmte Anzahl von Anwahlstellen-Taktimpulsen, was zur Folge hat, dass nur derjenige Rückwärtszähler genau den Zählwert Null erreicht, an dessen Programmiereingängen ein der Anzahl der Anwahlstellen-Taktimpulse entsprechender Zahlenwert vorgegeben ist.

Am Überlauf-Ausgang «0» dieses einen Rückwärtszählers 30 erscheint dann eine logische 1, die über ein Verzögerungsglied 34 dem D-Eingang des D-Flip-Flops 28 der Anwahlschaltung 15 zugeführt wird.

Kurze Zeit später erzeugt die Steuer- und Messzentrale 2 einen weiteren Reset-Impuls auf der Leitung 32, der zwar einerseits auch in den Rückwärtszähler 30, der durch die Steuer- und Messzentrale 2 angewählt worden war und genau auf Null heruntergezählt hatte, wieder den über die Lötbrücken 31 vorprogrammierten Zahlenwert einschreibt und somit die logische 1 am Überlaufausgang dieses Rückwärtszählers 30 zum Verschwinden bringt. Da diese Pegeländerung aber durch das Verzögerungsglied 34 am D-Eingang des D-Flip-Flops 28 erst etwas später wirksam wird, bleibt andererseits genügend Zeit, dass eben dieser Rücksetzimpuls, der dem Takt-Eingang des D-Flip-Flops 28 über ein ODER-Gatter 35 zugeführt wird, dieses Flip-Flop setzt, so dass an dessen Q-Ausgang eine logische 1 erscheint.

Der erste der hierauf auf der Leitung 17 erscheinenden Messstellen-Taktimpulse gelangt ebenfalls über das ODER-Gatter 35 an den Takt-Eingang des D-Flip-Flops 28 und setzt seinen Q-Ausgang wieder auf logisch Null, doch wird er gleichzeitig dem Takteingang des D-Flip-Flops 25 der ersten auf die Anwahlschaltung 15 folgenden Messstelle 5 zugeführt, das nun die eben noch im D-Flip-Flop 28 enthaltene logische 1 übernimmt.

Für alle folgenden Messstellen-Takte bleibt der D-Eingang des D-Flip-Flops 28 auf logisch Null, so dass durch das von den D-Flip-Flops 28 und 25 gebildete Schieberegister tatsächlich nur eine einzige logische 1 von Messstelle zu Messstelle weitergeschoben wird.

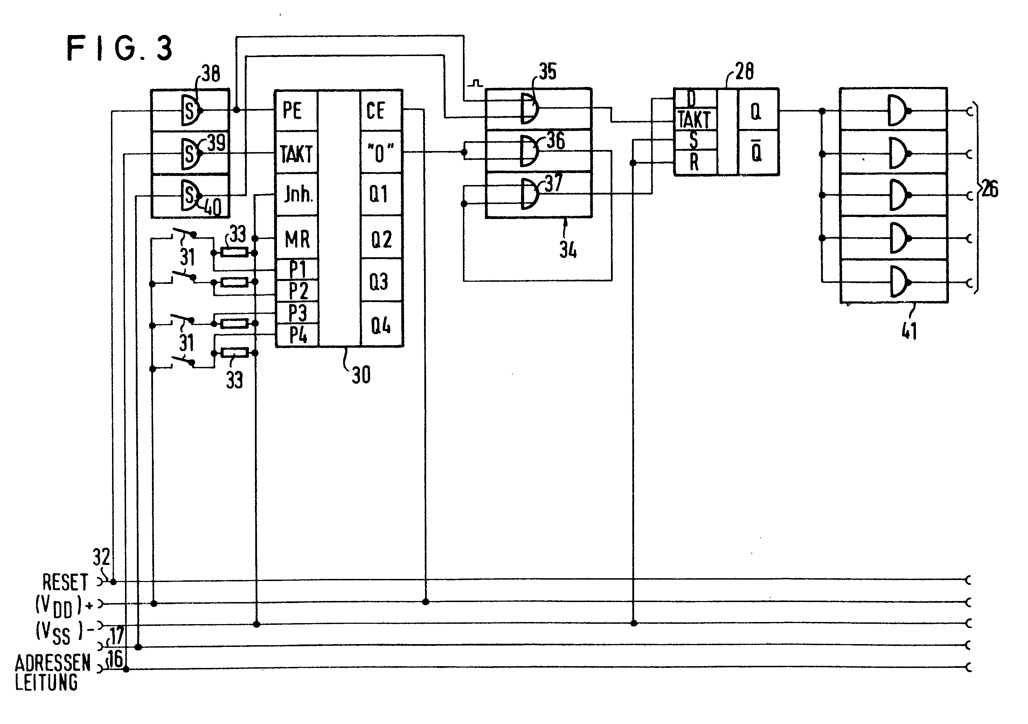

In Fig. 3 ist eine etwas modifizierte Ausführungsform einer Anwahlstelle 15 wiedergegeben, bei der der programmierbare Rückwärtszähler 30 nur vier Programmiereingänge umfasst, so dass hier die Messanordnung fünfzehn Anwahlstellen 15 umfassen kann. Da aber jeder einer Anwahlstelle nachgeschalteter Leitungsabschnitt einige 10 000 bis 100 000 Messstellen 5 umfassen kann, lassen sich bei einem Messstellenabstand von beispielsweise 1 m auch bereits mit diesen wenigen Anwahlstellen sehr grosse Leitungsnetze betreiben. Überdies ist es ohne weiteres möglich, mehrere der in Fig. 3 dargestellten Rückwärtszähler 30 miteinander zu verbinden und so zu wesentlich grösseren Anordnungen zu kommen.

Jeder der Programmiereingänge P1 bis P4 ist über einen Widerstand 33 mit einer negativen Versorgungsspannung $V_{ss}$ verbunden, so dass er zunächst auf einer logischen Null liegt. Jeder der Programmiereingänge kann aber über eine hier als Schalter 31 dargestellte Programmiervorrichtung mit der positiven Versorgungsspannung $V_{DD}$ verbunden werden, so dass er auf logisch 1 gezogen wird.

Der Takteingang des Rückwärtszählers 30 ist hier nicht unmittelbar sondern über einen als Impulsformer und Puffer dienenden Schmitt-Trigger 39 mit der Adressenleitung 16 verbunden. Da derartige Schmitt-Trigger als MOS-Bausteine mit invertierendem Ausgang handelsüblich zur Verfügung stehen, müssen die auf der Adressenleitung 16 erscheinenden Anwahlstellen-Taktimpulse bei der Ausführungsform nach Fig. 3 die entgegengesetzte Polarität besitzen wie bei der Ausführungsform nach Fig. 2.

Dasselbe gilt für die Reset-Impulse die von der Leitung 32 über den Schmitt-Trigger-Inverter 38 einerseits dem PE-Eingang des Rückwärtszählers 30 und andererseits über das ODER-Gatter 35 dem Takteingang des D-Flip-Flops 28 zugeführt werden. Die Messstellen-Taktimpulse gelangen von der Leitung 17 über den Schmitt-Trigger-Inverter 40 an den zweiten Eingang des ODER-Gatters 35.

Die Q-Ausgänge des Rückwärtszählers 30 bleiben unbenutzt. Lediglich der Überlaufausgang «0» ist über ein hier von zwei ODER-Gattern 36 und 37 gebildetes Verzögerungsglied 34 an den D-Eingang des D-Flip-Flops 28 gelegt.

Der wesentlichste Unterschied des hier dargestellten Ausführungsbeispiels einer Anwahlschaltung 15 zu der Anwahlschaltung gemäss Fig. 2 besteht darin, dass der Q-Ausgang des D-Flip-Flops 28 nicht nur eine sondern fünf parallel liegende Ausgangsleitungen 26 jeweils über einen als Puffer dienenden Inverter 41 ansteuert.

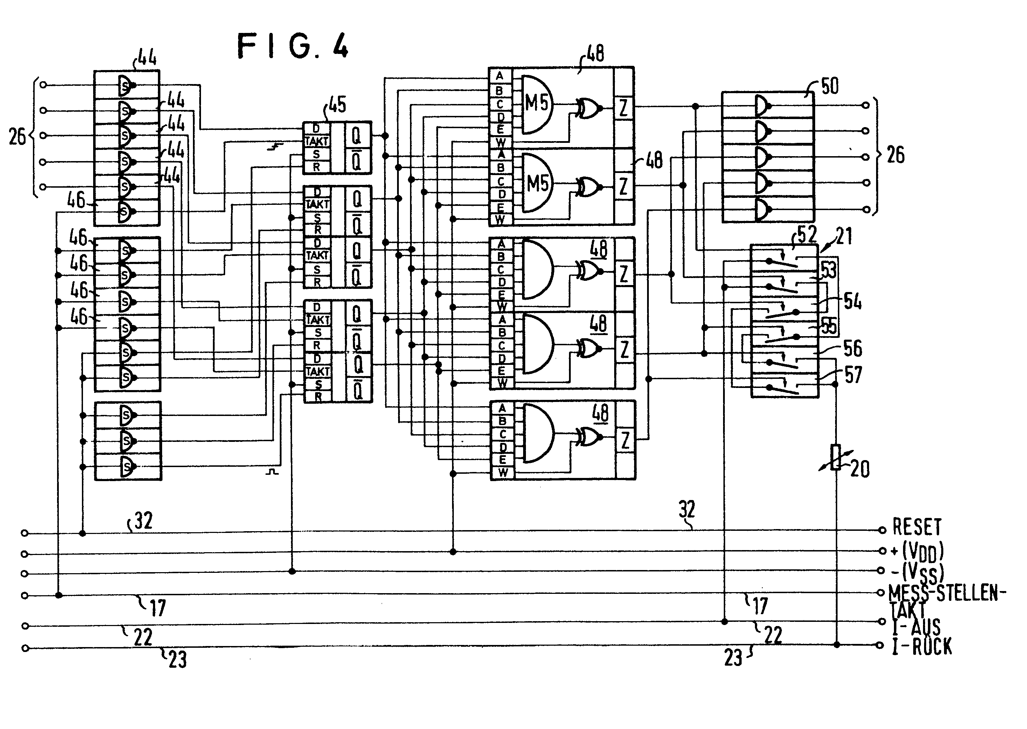

Diesen fünf Ausgangsleitungen der Anwahlstelle 15 nach Fig. 3 entsprechen fünf Eingangsleitungen 26 einer in Fig. 4 dargestellten Ausführungsform einer Messstelle 5. Jede dieser Eingangsleitungen 26 ist zunächst zur Impulsformung einem invertierenden Schmitt-Trigger 44 zugeführt. Die fünf Ausgänge dieser Schmitt-Trigger 44 sind jeweils dem D-Eingang eines von fünf D-Flip-Flops 45 zugeführt, die hier dieselbe Rolle spielen wie das D-Flip-Flop 25 bei der Ausführungsform nach Fig. 2. Die D-Flip-Flops 45 liegen zueinander völlig parallel, d.h. auch ihre Takt-Eingänge werden gemeinsam von der Messstellen-Takt-Leitung 17 her über die Schmitt-Trigger-Inverter 46 angesteuert. Die nicht benötigten Set-Eingänge sind gemeinsam an die negative Versorgungsspannung $V_{ss}$ gelegt.

Sinn dieser zueinander völlig parallel arbeitenden D-Flip-Flops 45 ist es, die Zuverlässigkeit der Schaltungsanordnung im Vergleich zu der in Fig. 2 wiedergegebenen Ausführungsform zu erhöhen. Die Q-Ausgänge dieser D-Flip-Flops 45 steuern nämlich die Schalteranordnung 21 nicht direkt sondern über fünf Majoritäts-Logik-Schaltungen 48 an, die im vorliegenden Fall eine 3-Aus-5-Auswahl treffen. Das heisst, dass jede dieser im Handel als integrierter MOS-Baustein erhältlichen Logikschaltungen 48 an ihrem Ausgang genau den Logikpegel abgibt, der an wenigstens drei von ihren fünf Eingängen anliegt. Dadurch wird erreicht, dass die vom D-Flip-Flop 28 der zugehörigen Anwahlschaltung 15 abgegebene Information durch die betrachtete Schieberegister-Stufe auch dann noch richtig weitergegeben wird, wenn von den fünf parallel liegenden D-Flip-Flops 45 zwei ausgefallen sind. Da, wie bereits erwähnt, bis zu 100 000 Messstellen zu einem Leitungsabschnitt zusammengefasst und einer einzigen Anwahlschaltung 15 zugeordnet werden können, ist eine solche redundante Auslegung zur Gewährleistung eines über lange Zeiträume hinweg zuverlässigen Betriebes von grosser Wichtigkeit.

Die Ausgänge der Majoritäts-Logik-Schaltungen 48 werden einerseits über als Puffer dienende Inverter 50 an die Ausgänge der Messstelle geführt, von wo sie über den nächsten Abschnitt der Leitungen 26 mit den entsprechenden Eingängen der nächsten Messstelle verbunden sind.

Andererseits steuern die Ausgänge der Majoritäts-Logik-Schaltungen 48 die hier aus sechs einzelnen Schaltern 52 bis 57 bestehende Schalteranordnung 21. Die Schalter 52 bis 57 sind in zwei zueinander parallelen Gruppen, von denen jede aus den drei hintereinander geschalteten Schaltern 52, 55 und 56 bzw. 53, 54 und 57 besteht, zwischen die den eingeprägten Strom von der Steuer- und Messzentrale 2 zuführende Leitung 22 und den hier von einem Thermistor gebildeten Messfühler 20 geschaltet. Die Schalter 52 bis 54 und 57 werden jeweils von einer eigenen Majoritäts-Logik-Schaltung 48 angesteuert, während die Steuereingänge der beiden in einer der Gruppen hintereinanderliegenden Schalter 55 und 56 gemeinsam mit dem Ausgang einer Majoritäts-Logik-Schaltung 48 verbunden sind.

Diese bevorzugte Anordnung bietet vor allem dann, wenn als Schalter 52 bis 57 kontaktlose Halbleiter-Bauelemente, beispielsweise Feldeffekt-Transistor-Anordnungen zur Verwendung kommen, eine erhöhte Zuverlässigkeit, da die Parallelschaltung von zwei Schaltergruppen ein Schliessen der Schalteranordnung 21 auch noch dann erlaubt, wenn einer der Schalter nicht mehr geschlossen werden kann, und da die serielle Anordnung mehrerer Schalter in jeder Gruppe ein Öffnen der Schalteranordnung 21 auch noch dann erlaubt, wenn dies bei einem oder mehreren der Einzelschalter 52 bis 57 nicht mehr möglich sein sollte.

Bei der eben erwähnten Verwendung von kontaktlosen Halbleiter- bzw. Festkörperschaltern kann sich auch dann, wenn jede Schalteranordnung 21 nur einen einzigen Schalter umfasst, ein Problem daraus ergeben, dass diese «Schalter» im «geöffneten» Zustand keinen unendlich grossen Widerstandswert besitzen. Zwar ist der bei geöffnetem Schalter fliessende Reststrom ausserordentlich klein; da jedoch bei einer erfindungsgemässen Messanordnung sämtliche Schalter zueinander parallel zwischen den beiden Leitungen 22 und 23 liegen, kann sich bei einem bis zu mehreren 100 000 Messstellen umfassenden System im ungünstigsten Fall ein Gesamt-Reststrom in der Grössenordnung von einigen 100 Mikroampere bis einigen Milliampere ergeben, ohne dass auch nur einer der Schalter geschlossen ist. Da von der Steuer- und Messzentrale 2 her in die Leitung 22 gemäss der Erfindung ein Messstrom von beispielsweise 200 Mikroampere eingeprägt wird, würde ein solcher Reststrom eine vernünftige Messung unmöglich machen.

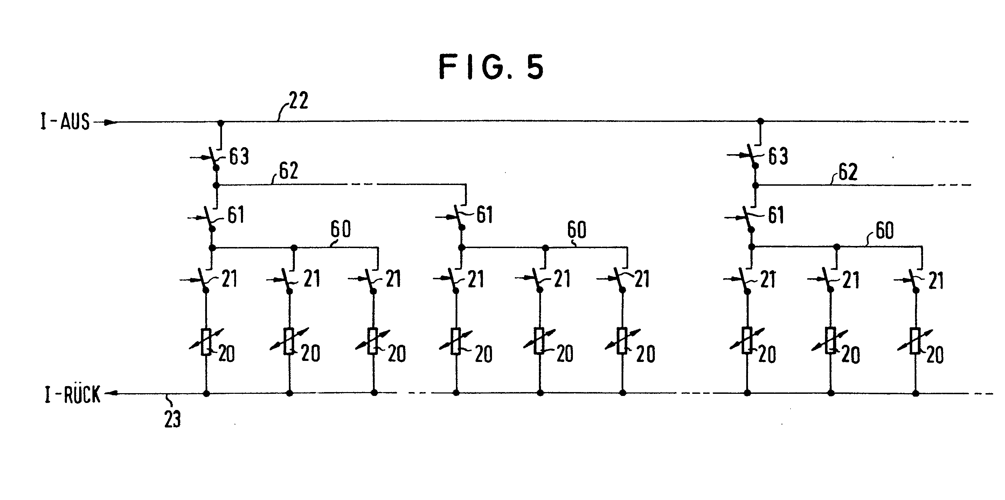

Bei einer besonders bevorzugten Ausführungsform einer erfindungsgemässen Messanordnung sind daher, wie in Fig. 5 schematisch dargestellt, die Messstellen-Schalteranordnungen 21 nicht einzeln unmittelbar mit der Strom-Einprägeleitung 22 verbunden, sondern gruppenweise an die nicht miteinander in Verbindung stehenden Abschnitte 60 einer weiteren im Kabel 1 vorgesehenen Ader gelegt. In Fig. 5 umfasst jede dieser Gruppen nur drei Schalteranordnungen 21, doch können in der Praxis ohne weiteres 50 und mehr Schaltergruppen 21 an einen einzigen Ader-Abschnitt 60 gelegt werden.

Jedem Ader-Abschnitt 60 ist eine weitere kontaktlose Halbleiter-Schalteranordnung 61 zugeordnet, über die er bei kleineren Messanordnungen direkt mit der Strom-Einpräge-Ader 22 verbunden sein kann.

Bei grösseren System können jedoch, wie in Fig. 5 dargestellt, die Schalteranordnungen 61 dadurch nochmals gruppenweise zusammengefasst sein, dass sie mit den wiederum nicht miteinander in Verbindung stehenden Abschnitten 62 einer weiteren Ader des Kabels 1 verbunden sind, wobei jedem dieser Abschnitte eine Halbleiter-Schalteranordnung 63 zugeordnet ist, die dann die Verbindung zur Strom-Einpräge-Ader 22 herstellt.

Durch diese Anordnung wird erreicht, dass bei geöffneten Schaltern aus der Konstant-Stromquelle der Steuer- und Messzentrale 2 nur die Restströme der zueinander parallel liegenden Schalteranordnungen 63 fliessen, deren Zahl gegenüber der Gesamtzahl von Schalteranordnungen 21 so stark verringert ist, dass der Gesamtreststrom klein im Vergleich zum Messstrom bleibt.

Für extrem grosse Messanordnungen kann die eben beschriebene hierarchische Schalteranordnung gemäss der Erfindung noch um eine oder mehrere Stufen erweitert werden.

Es ist klar, dass bei der in Fig. 5 gezeigten Anordnung, bei der die Ansteuer-Schaltungen für die Messstellen-Schalteranordnungen 21 der besseren Übersichtlichkeit halber weggelassen sind, auch für eine Ansteuerung der Schalteranordnungen 61 und 63 gesorgt werden muss, da diese Schalter ja geschlossen werden müssen, damit der Messstrom durch die zur jeweiligen Gruppe bzw. Untergruppe gehörenden Messfühler 20 fliessen kann.

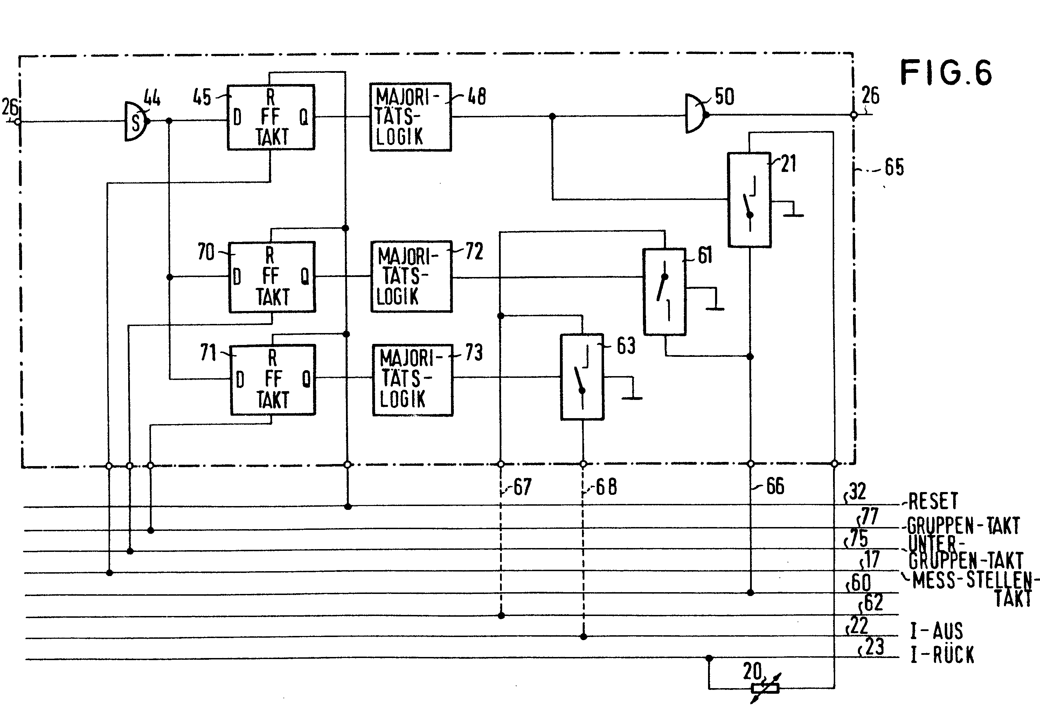

Eine bevorzugte Möglichkeit, diese Ansteuerung der Schaltergruppen 61 und 63 zu realisieren ist in Fig. 6 schematisch dargestellt. Dabei wird gemäss einer besonders bevorzugten Ausführungsform der erfindungsgemässen Messanordnung davon ausgegangen, dass die Steuerungselektronik für jede Messstelle 5 als integrierte Schaltung ausgebildet ist, deren körperliche Grenzen hier durch die gestrichelte Linie 65 wiedergegeben sind. Es kann dann im Prinzip jede Messstelle nicht nur die ohnehin erforderliche Schalteranordnung 21 nebst zugehöriger Ansteuerelektronik sondern auch die Schalteranordnungen 61 und 63 mit den zugehörigen Ansteuerschaltungen umfassen. Dadurch vergrössert sich zwar die Zahl der auf einem solchen Messstellen-Chip untergebrachten Bauelemente, doch spielt dies bei der Fertigung entsprechend hoher Stückzahlen hinsichtlich der Herstellungskosten nur eine untergeordnete Rolle.

Die in Fig. 5 dargestellte Zusammenfassung von beispielsweise fünfzig Messstellen 5 zu einer Untergruppe erfolgt dann dadurch, dass für neunundvierzig dieser Messstellen nur die jeweilige Schalteranordnung 21 direkt mit dem Leitungsabschnitt 60 verbunden wird, wie dies in Fig. 6 dargestellt ist, während bei der fünfzigsten Messstelle zusätzlich zu dieser Verbindung 66 auch noch die in Fig. 6 nur gestrichelt eingezeichnete Verbindung 67 zwischen der Schalteranordnung 61 und dem Leitungsabschnitt 62 realisiert wird.

Fünfzig der so gebildeten Untergruppen können dann dadurch zu einer Gruppe zusammengefasst werden, dass man bei der zweitausendfünfhundertsten Messstelle zusätzlich zu den Verbindungen 66 und 67 auch noch die Verbindung 68 zwischen der Schalteranordnung 63 und der Strom-Einpräge-Leitung 22 schliesst.

Die Ansteuerelektronik der Schalteranordnungen 21, 61 und 63 ist in Fig. 6 der besseren Übersichtlichkeit halber stark vereinfacht dargestellt. So entsprechen die durch jeweils einfache Bauelement-Symbole wiedergegebenen Schmitt-Trigger 44, Flip-Flop 45, Majoritäts-Logik-Schaltungen 48 und Ausgangs-Puffer 50 beispielsweise jeweils der mit demselben Bezugszeichen bezeichneten Schaltungsanordnung aus Fig. 4, umfassen also beispielsweise jeweils fünf identische Bauelemente.

Dasselbe gilt auch für die neu hinzugekommenen Flip-Flop-Anordnungen 70 und 71, die in Verbindung mit den nachgeschalteten Majoritäts-Logik-Anordnungen 72 und 73 die Schalteranordnungen 61 und 63 steuern, die in ihrem Aufbau beispielsweise mit der in Fig. 4 wiedergegebenen Schalteranordnung 21 identisch sein können.

Die Flip-Flop-Anordnungen 70 und 71 einer jeden Messstelle werden über die über die Leitungen 26 kommenden Logik-Pegel in derselben Weise wie die Flip-Flop-Anordnung 45 immer dann zum Setzen ihrer Q-Ausgänge auf eine logische 1 vorbereitet, wenn nach Aktivierung der zum betreffenden Leitungsabschnitt gehörenden Anwahlschaltung 15 eine entsprechende Information durch das von den Flip-Flop-Anordnungen 45 gebildete Schieberegister weitergegeben wird. Die Zeiträume, während derer an den Q-Ausgängen der Flip-Flop-Anordnungen 45, der Flip-Flop-Anordnungen 70 und der Flip-Flop-Anordnungen 71 eine logische 1 anliegt, sind jedoch verschieden, da jede dieser Flip-Flop-Anordnungen durch einen eigenen Takt, nämlich die Flip-Flop-Anordnung 45 durch den auf der Leitung 17 erscheinenden Messstellen-Takt, die Flip-Flop-Anordnung 70 durch den auf der Leitung 75 erscheinenden Untergruppen-Takt und die Flip-Flop-Anordnung 71 durch den auf der Leitung 77 erscheinenden Gruppen-Takt auf den an ihren D-Eingängen anliegenden Logikpegel gesetzt werden.

Da bei dem beschriebenen Ausführungsbeispiel davon ausgegangen wird, dass die Unterteilung von Messstellen in Untergruppen und Gruppen immer nur innerhalb eines Leitungsabschnittes erfolgt, können alle diese Flip-Flop-Anordnungen 45, 70 und 71 gemeinsam durch die auf der Leitung 32 erscheinenden Reset-Impulse zurückgesetzt werden.

Die Gruppen- und Untergruppen-Taktsignale können ebenfalls von der Steuer- und Messzentrale 2 erzeugt und über die Leitungen 75 und 77 an alle Messstellen gegeben werden. Eine Wirkung in dem Sinn, dass die zugehörigen Flip-Flop-Anordnungen 70 bzw. 71 mit ihren Q-Ausgängen auf eine logische 1 gesetzt werden, ergibt sich jedoch nur bei den Messstellen, deren Anwahl-Schaltung 15 gerade aktiviert worden ist, und die über die Leitung 26 synchron mit dem betreffenden Gruppen- bzw. Untergruppen-Taktsignal eine logische 1 erhalten. Nimmt man an, dass jeweils fünfzig Messstellen zu einer Untergruppe und jeweils fünfzig Untergruppen zu einer Gruppe zusammengefasst sind, so muss bei jedem ersten, einundfünfzigsten, einhundertersten usw. Messstellen-Taktsignal ein Untergruppen-Taktsignal und bei jedem ersten, zweitausendfünfhundertersten, fünftausendersten usw. Messstellen-Taktsignal ein Gruppen-Taktsignal erzeugt werden.

Die Steuer- und Messzentrale 2 der erfindungsgemässen Messanordnung umfasst prinzipiell dieselben Bestandteile, wie die in der DE-OS 2 800 185 beschriebene Zentraleinheit. So ist, wie in Fig. 7 dargestellt eine Konstantstromquelle 80 vorgesehen, die den Messstrom über die Leitung I-AUS und die sich hieran anschliessende Ader 22 des Kabels 1 in den Messfühler 20 derjenigen Messeinheit 5 einprägt, deren Schalteranordnung 21 jeweils gerade geschlossen ist. Dieser Messstrom fliesst dann über die Ader 23 des Kabels 1 über den Anschluss I-RÜCK zur Konstantstromquelle 80 zurück, so dass der an dem betreffenden Messfühler 20 auftretende, ein Mass für den jeweiligen zu überwachenden Umgebungsparameter, also beispielsweise die Temperatur der Umgebung des Messfühlers 20 darstellende Spannungsabfall erfasst und ausgewertet werden kann. Zu diesem Zweck wird dieser Spannungsabfall zunächst von einem Differenzverstärker 81 verstärkt und dann einem Analogspeicher 82 zugeführt, der beispielsweise als Sample-and-Hold-Schaltung ausgebildet sein kann und von einer Steuereinheit 84 über die Leitung 85 so angesteuert wird, dass er den vom Differenzverstärker 81 abgegebenen Spannungswert erst dann übernimmt und zwischenspeichert, wenn seit dem Schliessen der Schalteranordnung 21 der gerade angewählten Messstelle 5 ein vorgegebener Mindestzeitraum verstrichen ist.

Dies ist vor allem dann von grosser Wichtigkeit, wenn die Schalteranordnungen 21 mit Hilfe von aus Feldeffekt-Transistoren bestehenden Analog-Schaltern aufgebaut sind. Diese Schalter besitzen nämlich die Eigenschaft, dass sich ihr Widerstandswert dann, wenn das sie schliessende bzw. öffnende Ansteuersignal nicht unendliche steile Impulsflanken besitzt, von dem dem geöffneten Zustand entsprechenden sehr hohen Wert zu dem dem geschlossenen Zustand entsprechenden sehr niederen Wert und umgekehrt nicht wie an einem mechanischen Schalter sprungartig sondern kontinuierlich ändert. Während des Schliessens bzw. Öffnens kann also ein solcher Schalter beliebige Widerstandswerte durchlaufen, was zur Folge hat, dass in diesen Zeiten am Ausgang des Differenzverstärkers 81 auch beliebige Spannungswerte auftreten können. Dadurch, dass der Analogspeicher 82 von der Steuereinheit 84 so angesteuert wird, dass er den vom Differenzverstärker 81 abgegebenen Spannungswert erst dann übernimmt, wenn das ebenfalls von der Steuereinheit 84 abgegebene Messstellen-Taktsignal den betreffenden Schalter 21 mit Sicherheit vollständig geschlossen hat, wird also erreicht, dass das System nur im eingeschwungenen Zustand arbeitet und tatsächlich nur der am jeweiligen Messfühler 20 auftretende Spannungsabfall gemessen wird.

Der so gewonnene Spannungswert wird dann einem Komparator 87 zugeführt, was entweder in analoger Form oder, wie in Fig. 7 dargestellt, nach einer mit Hilfe eines Analog/Digital-Wandlers 88 durchgeführten Digitalisierung erfolgen kann.

Der Komparator 87 vergleicht dann unter Regie der Steuereinheit 84 die digitalisierten Messwerte mit Sollwerten, die ihm von einem Sollwertspeicher 90 zugeführt werden.

Diese Sollwerte geben denjenigen Wert des zu überwachenden physikalischen Umgebungsparameters der jeweils angewählten Messstelle wieder, der im Normalfall zu erwarten ist.

Sie können z.B. dadurch gewonnen werden, dass man in vorgegebenen Zeitabständen die Messwerte aller Messstellen der Reihe nach abfragt und dann als neue Sollwerte über die Mehrfachleitung 91 dem Sollwertspeicher 90 zuführt, wenn sich zwischen einander benachbarten Messstellen keine ungewöhnlich hohen Messwert-Unterschiede ergeben. Auf diese Weise können z.B. dann, wenn die Messstellen zur Überwachung einer Fernwärmeleitung mit Thermistoren ausgerüstet sind, die sich immer auf eine Vielzahl von Messfühlern 20 in der gleichen Weise auswirkenden Einflüsse einer beispielsweise durch Änderung der Sonneneinstrahlung bewirkten globalen Temperaturänderung als «Normalfall» erkannt und eliminiert werden, während dann, wenn sich aufgrund eines Lecks in der Fernwärmeleitung der Temperaturgradient zwischen einigen wenigen Messstellen und ihren Nachbarmessstellen drastisch ändert, der so bewirkte Unterschied zwischen den an diesen Messstellen gewonnenen Messwerten und den Sollwerten vom Komparator 87 erkannt und durch Abgabe eines Fehlersignals über die Leitung 92 der Steuereinheit 84 angezeigt werden kann, die dann weitere Überprüfungs- bzw. Alarmmassnahmen auslösen kann.

In einem anderen Anwendungsfall, wo z.B. die Messanordnung zur Überwachung eines viele Räume umfassenden Gebäudekomplexes mit lichtempfindlichen Widerständen als Messfühler 20 ausgestattet ist, kann für alle Messstellen 5 ein einheitlich festgelegter Sollwert vorgegeben werden, von dem das Messsignal immer dann deutlich abweicht, wenn in dem betreffenden Raum nachts vergessen wurde, das Licht auszuschalten.

Darüber hinaus kann der Komparator 87 so ausgebildet werden, dass er den ein Leitungsabschnittsende kennzeichnenden, aus dem üblichen Messbereich deutlich herausfallenden, beispielsweise vom Metallschichtwiderstand 29 einer Pseudomessstelle erzeugten Messwert von den übrigen Messwerten unterscheidet und über die Leitung 93 an die Steuereinheit 84 eine entsprechende Information liefert.

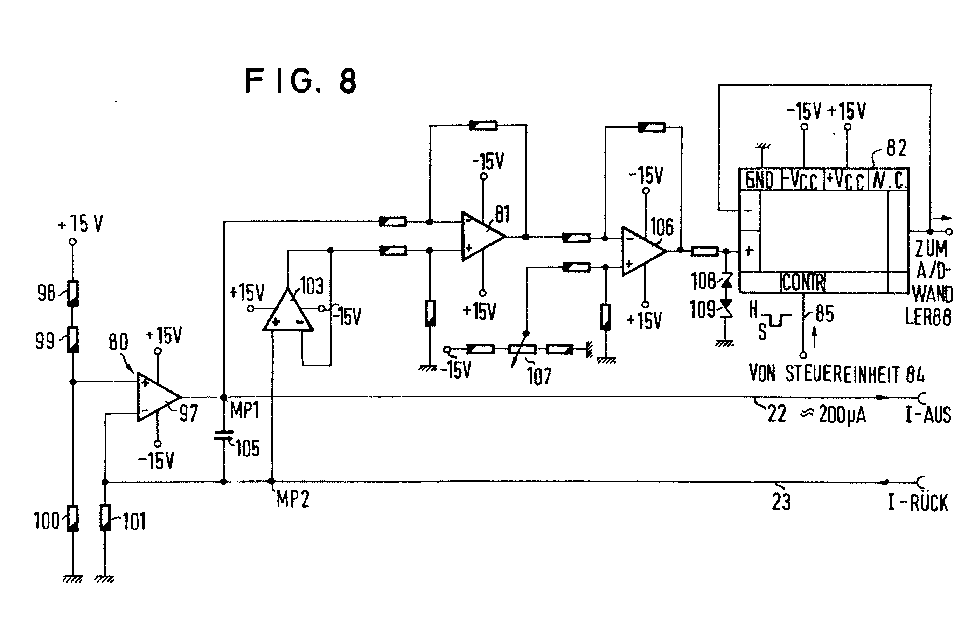

In Fig. 8 ist der in Fig. 7 mit der gestrichelten Linie 95 umrandete Teil der Steuer- und Messzentrale 2 ausführlicher und einer besonders bevorzugten Ausführungsform der erfindungsgemässen Messanordnung entsprechend dargestellt.

Gemäss Fig. 8 wird die Konstantstromquelle 80 von einem Operationsverstärker 97 gebildet, der an seinem Plus-Eingang durch einen von Metallschichtwiderständen 98, 99 und 100 gebildeten Spannungsteiler eine fest vorgegebene Spannung erhält und dessen Minus-Eingang einerseits mit der den Messstrom zurückführenden Ader 23 des Kabels 1 und andererseits über einen Metallschichtwiderstand 101 mit der Systemmasse verbunden ist. Der Operationsverstärker 97 regelt nun den von seinem Ausgang über die Ader 22 zu dem jeweils eingeschalteten Messfühler 20 fliessenden und über die Ader 23 zurückkehrenden Strom so, dass am Widerstand 101 genau die gleiche Spannung abfällt, wie an dem vom positiven Eingang des Operationsverstärkers 97 abgetasteten Punkt des Spannungsteilers. Da die Metallschichtwiderstände 98 bis 101 praktisch keinerlei Drifterscheinungen aufweisen, wird vom Operationsverstärker 97 also immer ein konstanter Strom abgegeben.

Damit ändert sich aber je nach dem momentanen Widerstandswert des gerade zwischen die Adern 22 und 23 geschalteten Messfühlers die Spannung zwischen den Punkten MP1 und MP2, die somit ein Mass für den zu messenden physikalischen Umgebungsparameter darstellt.

Diese Spannung soll nun dem Differenzverstärker 81 zugeführt werden, damit sie weiterverarbeitet werden kann. Dieser Differenzverstärker 81 wird insbesondere deswegen eingesetzt, weil er eine sehr gute Gleichtaktsignalunterdrückung besitzt. Dies ist deswegen erforderlich, weil selbst dann, wenn das die Steuer- und Messzentrale 2 mit den Anwahlstellen 15 und Messstellen 5 verbindende Kabel 1 sehr gut abgeschirmt wird, immer noch erhebliche Störspannungen auf kapazitive oder induktive Weise auf die Adern 22 und 23 eingekoppelt werden können. Da diese Störspannungen aber auf den Adern 22 und 23 und damit an den Messpunkten MP1 und MP2 mit gleicher Amplitude und gleicher Phasenlage erscheinen, werden sie vom Differenzverstärker 81 vollständig unterdrückt.

Dies ist allerdings nur dann möglich, wenn er wirklich einwandfrei arbeitet, d.h. an seinen beiden Eingängen in etwa die gleichen Eingangswiderstände sieht. Nun ist der Ausgangswiderstand des Operationsverstärkers 97 sehr klein im Vergleich zum Widerstandswert des Metallschichtwiderstandes 101. Ohne weitere Massnahmen würde dies zu starken Asymmetrien am Eingang des Differenzverstärkers 81 führen und dessen Gleichtaktsignalunterdrückung verschlechtern. Daher ist erfindungsgemäss vorgesehen, dass das Potential vom Messpunkt MP2 dem Differenzverstärker 81 nicht direkt sondern über einen als Impedanzwandler bzw. Spannungsfolger geschalteten Operationsverstärker 103 zugeführt, der die Verstärkung 1 besitzt und dazu dient, den hohen Widerstandswert des Metallschichtwiderstandes 101 auf einen dem Ausgangswiderstand des Operationsverstärkers 97 entsprechenden niederen Wert herabzusetzen. Damit wird dann der Differenzverstärker 81 völlig symmetrisch und mit sehr guter Gleichtaktsignalunterdrückung betrieben.

Sehr hochfrequente Störspannungen zwischen den Messpunkten MP1 und MP2 werden durch den Kondensator 105 kurzgeschlossen.

Gemäss Fig. 7 ist dem Differenzverstärker 81 ein weiterer Operationsverstärker 106 nachgeschaltet, der prinzipiell auch weggelassen werden kann, hier vorteilhafterweise aber zur Signalanpassung eingesetzt wird. An seinem positiven Eingang wird ihm nämlich ein durch einen Spannungsteiler 107 vorgegebener fester Spannungswert zugeführt, so dass an seinem Ausgang nur die Differenz zwischen diesem Spannungswert und der jeweiligen Messspannung erscheint.

Dies dient zur Messbereichsanpassung, da ja die zu messenden Spannungsänderungen $\Delta U$ immer nur einen relativ kleinen Prozentsatz der insgesamt an den Messfühlern 20 abfallenden Spannung ausmachen und der Sockelwert ohne Interesse ist.

Das Ausgangssignal des Operationsverstärkers 106 wird dann dem Eingang einer als Analogspeicher dienenden Sample-and-Hold-Schaltung 82 zugeführt, der durch zwei in Serie gegeneinander geschaltete, zur Systemmasse führende Zener-Dioden 108 und 109 gegen Überspannungen geschützt wird.

Diese Sample-and-Hold-Schaltung 82 wird, wie bereits beschrieben, über die Leitung 85 von der Steuereinheit 84 her so angesteuert, dass sie den vom Operationsverstärker 106 abgegebenen Spannungswert nur dann übernimmt, wenn sich die gerade angewählte Schaltereinheit 21 im eingeschwungenen Zustand befindet, d.h. also mit Sicherheit geschlossen ist und einen konstanten, äusserst kleinen Widerstandswert besitzt.

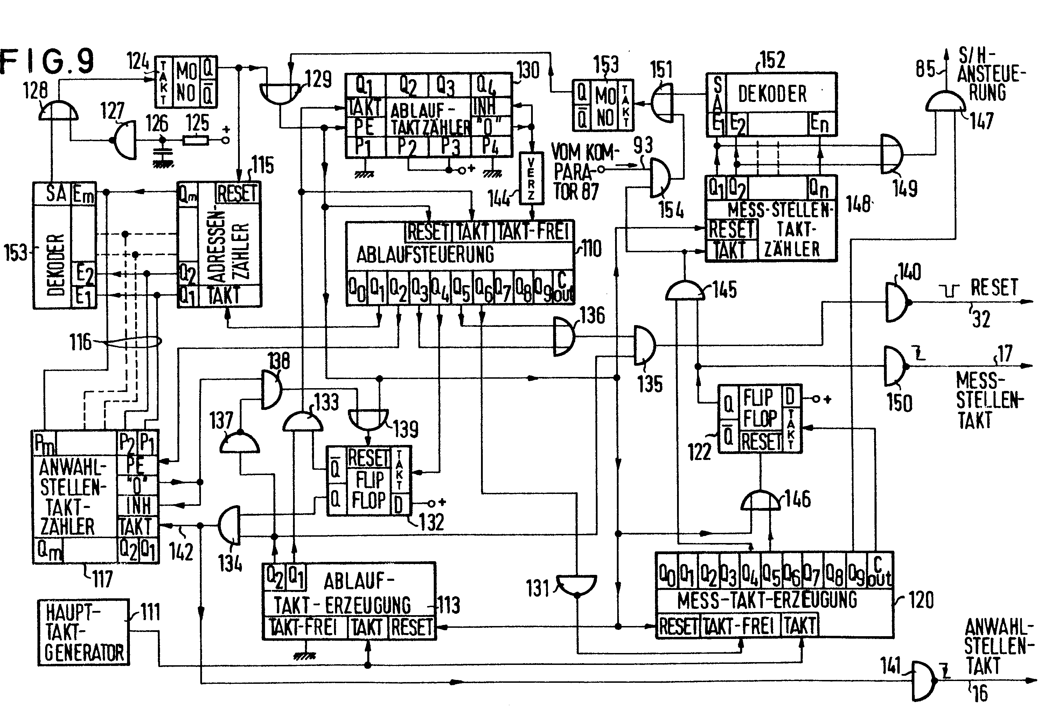

In Fig. 9 ist eine besonders bevorzugte Ausführungsform desjenigen Teiles der Steuer- und Messzentrale 2 wiedergegeben, der für die Erzeugung der Anwahlstellen-Takt-, Messstellen-Takt- und Reset-Signale zuständig ist, d.h. also die Adern 16, 17 und 32 des Kabels 1 mit Signalen versorgt. Ausserdem steht diese Schaltung mit dem Komparator 87 (Fig. 7) über die Leitung 93 in Verbindung, von der sie das Erreichen einer Pseudo-Messstelle kennzeichnende Signale erhält. Eine weitere Verbindung geht über die Leitung 85 zur Sample-and-Hold-Schaltung 82 (Fig. 7 und 8), über die diese zu den geeigneten Zeiten zur Übernahme des vom Operationsverstärker 106 abgegebenen Messwertes veranlasst wird.

Der zentrale Bestandteil der in der Fig. 9 dargestellten Schaltungsanordnung ist eine Ablaufsteuerung 110, die als Johnson-Zähler ausgebildet ist und zum Durchlaufen aller Steuerungsvorgänge, die für die Anwahl eines Leitungsabschnittes, die Abfrage der in diesem Leitungsabschnitt vorhandenen Messstellen und die Übernahme der jeweiligen Messwerte in die weitere Verarbeitungsschaltung erforderlich sind, Zeitabstände $T_0$ bis $T_6$ definiert, die in ihrer Gesamtheit im folgenden als Leitungsabschnitt-Zyklus bezeichnet werden.

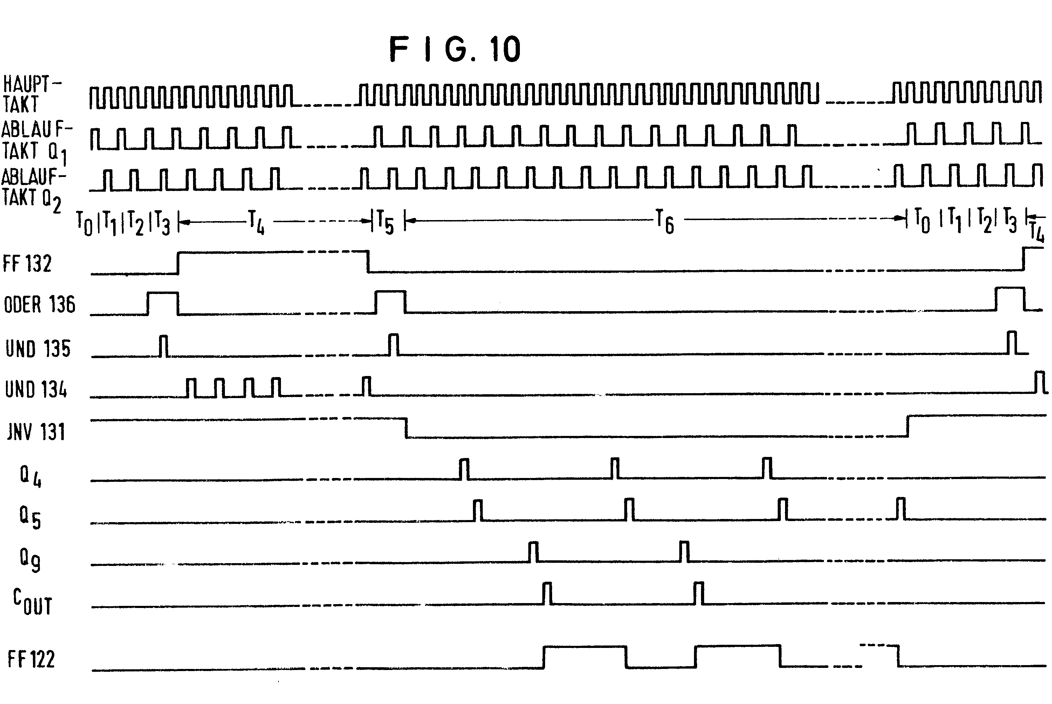

Ein weiterer, jedoch nur zweistufiger Johnson-Zähler 113 dient dazu, aus dem von einem Haupttakt-Generator 111 abgegebenen Haupttaktsignal, das in Fig. 10 in der obersten Zeile dargestellt ist, das in der zweiten Zeile von oben in Fig. 10 wiedergegebene Ablauf-Takt-Signal zu erzeugen, das er an seinem Ausgang $Q_1$ abgibt.

Weiterhin ist ein Adressenzähler 115 vorgesehen, dessen Zählerstand jeweils am Ende eines Leitungsabschnitt-Zyklus um einen Zählschritt erhöht wird. Dadurch wird an den Ausgängen $Q_1$ bis $Q_M$ dieses Adressen-Zählers eine neue Anwahlstellen-Adresse vorgegeben, die über die Leitungen 116 an einen als Anwahlstellen-Taktzähler dienenden, programmierbaren Rückwärtszähler 117 gelegt wird, der dafür sorgt, dass über die Leitung 16 in einem durch die Ablaufsteuerung 110 definierten Zeitraum als Anwahlstellen-Takt eine Folge von Impulsen abgegeben wird, deren Anzahl der vom Adressenzähler 115 vorgegebenen Zahl entspricht.

Ein dritter Johnson-Zähler 120 dient zur Erzeugung eines Mess-Taktes, aus dem einerseits durch ein Flip-Flop 122 der auf der Leitung 17 abzugebende Messstellen-Takt und anderseits das zu diesem Messstellen-Takt in der richtigen zeitlichen Lage zu erzeugende Ansteuerungssignal für Sample-and-Hold-Schaltung 82 abgeleitet werden.

Bei der nun folgenden Funktionsbeschreibung der in Fig. 9 wiedergegebenen Schaltung wird davon ausgegangen, dass die in ihr enthaltenen Johnson-Zähler, Flip-Flops, Vorwärts- und Rückwärtszähler nach dem Einschalten der Stromversorgung ohne weitere Massnahmen an ihren Ausgängen in völlig zufälliger Weise logische 1- bzw. O-Pegel zeigen würden. Daher ist ein Start-Monoflop 124 vorgesehen, das kurz nach dem Einschalten der Stromversorgung von einem sich über einen Widerstand 125 aufladenden Kondensator 126 über einen Inverter 127 und ein ODER-Gatter 128 so getriggert wird, dass es an seinem Q-Ausgang einen Rücksetzimpuls abgibt, der dem Adressenzähler 115 direkt und allen übrigen Zählern und Flip-Flops über ein ODER-Gatter 129 zugeführt wird. Durch diesen Rücksetzimpuls wird die Ablaufsteuerung 110 in einen Zustand gebracht, in dem sie lediglich an ihrem Ausgang $Q_0$ eine logische 1 zeigt, während an allen anderen Ausgängen eine logische O erscheint. Damit befindet sich die Anordnung im Zeitintervall $T_0$ (siehe auch 4. Zeile von oben in Fig. 10).

Weiterhin geht der vom ODER-Gatter 129 abgegebene Rücksetzimpuls an den PE-Eingang eines programmierbaren Rückwärtszählers 130, der dazu dient, die der Ablaufsteuerung 110 zugeführten Ablauftakt-Impulse abzuzählen und durch ein an seinem Überlauf-Ausgang «O» erscheinendes Signal die Ablaufsteuerung 110 über ihren Takt-Freigabe-Eingang zu blockieren, wenn dieser sechs Taktimpulse zugeführt worden sind. Daher sind die Programmiereingänge $P_1$ bis $P_4$ dieses Ablauftakt-Zählers 130 so an Masse bzw. die positive Versorgungsspannung angeschlossen, dass in ihn durch den auf seinen PE-Eingang einwirkenden Rücksetzimpuls der Zahlenwert sechs eingegeben wird.

Die Ausgangsimpulse des beim Einschalten angeschwungenen Haupttakt-Generators 111 werden dem Takteingang sowohl des zur Ablauf-Takt-Erzeugung dienenden Johnson-Zählers 113 als auch des zur Messtakt-Erzeugung dienenden Johnson-Zählers 120 zugeführt. Letzterer ist aber durch eine an seinem Takt-Freigabeeingang anliegende logische 1 blockiert, die diesem über einen Inverter 131 von dem auf logisch O liegenden Ausgang $Q_6$ der Ablaufsteuerung 110 zugeführt wird.

Auf die Haupttakt-Signale reagiert also zunächst nur der Johnson-Zähler 113, der an seinem Ausgang $Q_1$ einen ersten Impuls abgibt, welcher über das vom $\overline{Q}$-Ausgang eines ebenfalls zurückgesetzten Unterbrechungs-Flip-Flops 132 aufgesteuerte UND-Gatter 133 an die Takteingänge sowohl des Ablauftakt-Zählers 130 als auch der Ablaufsteuerung 110 gelangt. Dadurch wird der Ausgang $Q_1$ der Ablaufsteuerung 110 auf logisch 1 gesetzt, während am Ausgang $Q_0$ wieder eine logische O erscheint.

Damit befindet sich die gesamte Anordnung im Zeitabschnitt $T_1$, der dazu dient, den Inhalt des Adressen-Zählers 115 um eins zu erhöhen, was durch die auf den Takteingang dieses Adressen-Zählers einwirkende steigende Signalflanke vom Ausgang $Q_1$ der Ablaufsteuerung 110 geschieht.

Der im Zeitabschnitt $T_1$ am Ausgang $Q_2$ des Johnson-Zählers 113 erscheinende Impuls (siehe Fig. 10, dritte Zeile von oben) bleibt ohne Wirkung, da das UND-Gatter 134 durch den auf logisch O liegenden Q-Ausgang des Unterbrechungs-Flip-Flops 132 gesperrt ist, während das UND-Gatter 135 durch das ODER-Gatter 136 an der Weitergabe dieses Impulses gehindert wird, da dieses ODER-Gatter 136 an seinen beiden Eingängen die Null-Pegel der Ausgänge $Q_3$ bzw. $Q_5$ der Ablaufsteuerung 110 erhält.

Der im Zeitabschnitt $T_1$ am Ausgang $Q_2$ des Johnson-Zählers 113 erscheinende Impuls kann also allenfalls über den Inverter 137 an das UND-Gatter 138 gelangen, das nach dem Einschalten der gesamten Anordnung gesperrt oder durchlässig sein kann, da der den zweiten Eingang dieses UND-Gatters ansteuernde Anwahlstellen-Taktzähler 117 keinen Rücksetzimpuls erhält und deshalb an seinem Überlaufausgang entweder eine logische O oder eine logische 1 aufweisen kann. Auch im letzteren Fall bleibt jedoch der vom $Q_2$-Ausgang des Johnson-Zählers 113 kommende Impuls ohne Wirkung, da er nach Durchgang durch das UND-Gatter 138 allenfalls über das ODER-Gatter 139 an den Rücksetzeingang des Unterbrechungs-Flip-Flops 132 gelangen kann, das ohnehin zurückgesetzt ist.

Der nächste Impuls des Haupttakt-Generators 111 gelangt dann wieder über den $Q_1$-Ausgang des Johnson-Zählers 113 und das UND-Gatter 133 an die Takteingänge des Ablauftakt-Zählers 130 und der Ablaufsteuerung 110. Der Inhalt des ersteren wird wieder um eins erniedrigt und die Ablaufsteuerung 110 schiebt die logische 1 von ihrem $Q_1$-Ausgang auf $Q_2$-Ausgang weiter. Dadurch erhält der PE-Eingang des Anwahlstellen-Taktzählers 117 ein Signal, was ihn dazu veranlasst, den vom Adressen-Zähler 115 über die Leitungen 116 abgegebenen Zahlenwert einzulesen. Damit befindet sich in diesem Rückwärtszähler 117 die Adresse der ersten Anwahlstelle 15. Eine eventuell an seinem Überlauf-Ausgang vorhandene logische 1 verschwindet, so dass auch der während dieses Zeitabschnittes $T_2$ am $Q_2$-Ausgang des Johnson-Zählers 113 erscheinende Impuls ohne Wirkung bleibt.

Der nächste Impuls am $Q_1$-Ausgang dieses Johnson-Zählers 113 schaltet die Anordnung auf den Zeitabschnitt $T_3$ weiter, der dadurch definiert ist, dass am $Q_3$-Ausgang der Ablaufsteuerung 110 eine logische 1 erscheint. Diese logische 1 wird über das ODER-Gatter 136 an das UND-Gatter 135 weitergeleitet, wie dies in Fig. 10 in der sechsten Zeile von oben dargestellt ist. Damit kann der nunmehr am $Q_2$-Ausgang des Johnson-Zählers 113 erscheinende Impuls das UND-Gatter 135 durchlaufen (siehe Fig. 10, siebte Zeile von oben) und über einen Puffer-Inverter 140 als Reset-Impuls auf die Leitung 32 abgegeben werden.

Durch diesen Reset-Impuls werden eventuell gesetzte Messstellen-Flip-Flops 25 bzw. 45 zurückgesetzt und in die Zähler 30 aller Anwahlstellen 15 die jeweiligen, durch die Programmiereinrichtung 31 vorgegebenen Zahlenwerte eingeschrieben. Dabei kann das D-Flip-Flop 28 (siehe Fig. 2 und 3) einer jeden Anwahlstelle an seinem Q-Ausgang entweder auf logisch 1 oder auf logisch 0 gesetzt werden, je nachdem, welcher Logikpegel beim Auftreten dieses Reset-Impulses am Überlauf-Ausgang des zugehörigen Rückwärts-Zählers 30 vorhanden war. Für den weiteren Funktionsablauf ist dieses eventuelle erste Setzen der D-Flip-Flops 28 jedoch ohne Bedeutung.

Durch den nächsten am $Q_1$-Ausgang des Johnson-Zählers 113 erscheinenden Taktimpuls wird die logische 1 der Ablaufsteuerung 110 vom $Q_3$-Ausgang an den $Q_4$-Ausgang weitergeschoben, wodurch das Unterbrechungs-Flip-Flop 132 gesetzt wird (siehe Fig. 10, fünfte Zeile von oben). Dadurch verschwindet die logische 1 am $\overline{Q}$-Ausgang dieses Flip-Flops und das UND-Gatter 133 ist bis auf weiteres gesperrt, so dass keine weiteren Impulse vom $Q_1$-Ausgang des Johnson-Zählers 113 an die Ablaufsteuerung 110 gelangen und diese weitertakten können. Statt dessen wird in dieser Zeit $T_4$ durch die am Q-Ausgang des Unterbrechungs-Flip-Flops 132 erscheinende logische 1 das UND-Gatter 134 geöffnet, so dass die am $Q_2$-Ausgang des Johnson-Zählers 113 erscheinenden Impulse auf die Leitung 142 gelangen können, wie dies in Fig. 10 in der achten Zeile von oben dargestellt ist.

Diese Impulse werden auch dem Takteingang des Anwahlstellen-Taktzählers 117 zugeführt, der sie ausgehend von dem Zahlenwert, der ihm zur Zeit $T_1$ vom Adressen-Zähler 115 eingegeben wurde, rückwärts solange abzählt, bis er den Wert 0 erreicht hat, worauf er über seinen Überlauf-Ausgang das UND-Gatter 138 öffnet, das somit die vom Inverter 137 beim Abfallen des letzten Impulses vom $Q_2$-Ausgang des Johnson-Zählers 113 erzeugte positive Signalflanke durchlässt und über das ODER-Gatter 139 das Unterbrechungs-Flip-Flop 132 zurücksetzt, so dass das UND-Gatter 134 wieder gesperrt wird. Das UND-Gatter 135 war in dem ganzen Zeitraum $T_4$ durch die an den Eingängen des ODER-Gatters 136 anliegenden logischen Nullen vom $Q_3$- bzw. $Q_5$-Ausgang der Ablaufsteuerung 110 ohnehin gesperrt, so dass kein Impuls auf die Rücksetzleitung 32 gelangen konnte.

Wie eben beschrieben wurde, begrenzt also der Anwahlstellen-Taktzähler 117 die Anzahl der vom UND-Gatter 134 abgegebenen Impulse auf die ihm vom Adressen-Zähler 115 vorgegebene Zahl, die bei jedem Leitungsabschnitt-Zyklus eine andere ist. Somit gelangt von der Leitung 142 über den Puffer-Inverter 141 eine genau dieser Zahl entsprechende Anzahl von Anwahlstellen-Taktimpulsen auf die Leitung 16, die sie an sämtliche Anwahlstellen 15 weitergibt.

Es sei darauf hingewiesen, dass der Puffer 141 ebenso wie der Puffer 140 dann invertierend sein muss, wenn die Anwahlstellen 15 der in Fig. 3 wiedergegebenen Ausführungsform entsprechen, während diese beiden Puffer für die in Fig. 2 dargestellte Ausführungsform nicht invertierend zu wählen sind.

In jedem Fall werden die vom UND-Gatter 134 über die Leitung 142, den Puffer 141 und die Leitung 16 abgegebenen Taktimpulse den Takteingängen der Rückwärtszähler 30 einer jeden Anwahlstelle 15 zugeführt und auch von diesen Rückwärts-Zählern 30 abgezählt. Da in jeden dieser Anwahlstellen-Rückwärts-Zähler 30 eine andere Zahl eingegeben worden ist, hat am Ende des Zeitabschnittes $T_4$ nur ein einziger dieser Rückwärts-Zähler 30 den Zählwert 0 erreicht, so dass an seinem Überlauf-Ausgang eine logische 1 erscheint.

Da, wie bereits erwähnt, am Ende des Zeitabschnittes $T_4$ das Unterbrechungs-Flip-Flop 132 wieder zurückgesetzt wird, (siehe auch Fig. 10, fünfte Zeile von oben) erscheint am $\overline{Q}$-Ausgang dieses Flip-Flops wieder eine logische 1, so dass das UND-Gatter 133 wieder für die am $Q_1$-Ausgang des Johnson-Zählers 113 auftretenden Impulse durchlässig wird. Somit schiebt der nächste dieser Impulse die logische 1 vom $Q_4$-Ausgang der Ablaufsteuerung 110 an den $Q_5$-Ausgang weiter, von wo sie über das ODER-Gatter 136 an das UND-Gatter 135 gelegt wird.

Der in dem nun herrschenden Zeitabschnitt $T_5$ am $Q_2$-Ausgang des Johnson-Zählers 113 erscheinende Impuls kann damit durch das UND-Gatter 135 an den Puffer 140 und von diesem auf die Reset-Leitung 32 gelangen.

Dieser zweite Reset-Impuls des Leitungsabschnitt-Zyklus setzt die Rückwärts-Zähler 30 sämtlicher Anwahlschaltungen 15 wieder auf den durch die jeweilige Programmiervorrichtung 31 vorgegebenen Zahlenwert, so dass auch der Rückwärts-Zähler 30, der durch die soeben abgegebenen Anwahlstellen-Taktimpulse auf den Zählwert 0 gebracht worden war, an seinem Überlauf-Ausgang die logische 1 wieder verliert. Das Verschwinden dieser logischen 1 wird aber durch die Verzögerungsschaltung 34 soweit verzögert, dass der über das ODER-Gatter 35 gleichzeitig auf den Takteingang des D-Flip-Flops 28 gelangte Reset-Impuls den Q-Ausgang dieses D-Flip-Flops 28 noch in der gewünschten Weise auf eine logische 1 setzen kann. Bei allen anderen Anwahlschaltungen 15 war der Überlauf-Ausgang des Rückwärts-Zählers 30 ohnehin auf logisch 0, so dass die zugehörigen D-Flip-Flops 28 an ihrem Q-Ausgang mit Sicherheit auf logisch 0 gesetzt werden. Damit ist nur für den einen durch den Zählwert des Adressen-Zählers 115 festgelegten Leitungsabschnitt die erste Stufe des von den D-Flip-Flops 28 und 25 dieses Leitungsabschnittes gebildeten Schieberegisters auf eine logische 1 gesetzt, die bei den nunmehr folgenden Messstellen-Taktsignalen von Messstelle zu Messstelle weitergeschoben werden kann.

Dies geschieht während des nun folgenden Zeitraums $T_6$, der durch den nächsten am $Q_1$-Ausgang des Johnson-Zählers 113 auftretenden Impuls eingeleitet wird. Dieser Impuls bringt auch den Ablauf-Taktzähler 130 auf den Zählwert 0, so dass an dessen Überlauf-Ausgang eine logische 1 erscheint, die über ein Verzögerungsglied 144 an den Takt-Freigabeeingang der Ablaufsteuerung 110 gelegt wird und diese bis auf weiteres sperrt. Das Verzögerungsglied 144 verhindert, dass die Ablaufsteuerung 110 aufgrund ungünstiger Signallaufzeit-Verhältnisse blockiert wird, bevor die logische 1 vom Ausgang $Q_5$ auf den Ausgang $Q_6$ weitergeschoben worden ist.

In dem nun beginnenden Zeitabschnitt $T_6$ fällt das Ausgangssignal des Inverters 131 auf logisch 0 ab, wie dies in der neunten Zeile von oben von Fig. 10 dargestellt ist, so dass nunmehr der zur Messtakt-Erzeugung dienende Johnson-Zähler 120 auf die vom Haupttakt-Generator 111 abgegebenen Impulse reagieren kann. Diese Impulse werden zwar auch weiterhin dem Johnson-Zähler 113 zugeführt, so dass an dessen Ausgängen $Q_1$ und $Q_2$ laufend weitere Impulse erscheinen, da aber die Ablaufsteuerung 110 durch den Ablauftakt-Zähler 130 blockiert ist, bleibt dies ohne weitere Effekte.

Es sei hier darauf hingewiesen, dass die Blockierung der Ablaufsteuerung 110 auch auf andere Weise erfolgen kann. So ist es beispielsweise möglich, die zu Beginn des Zeitabschnittes $T_6$ am Ausgang $Q_6$ der Ablaufsteuerung 110 erscheinende logische 1 über das Verzögerungsglied 144 auf den Takt-Freigabeeingang der Ablaufsteuerung 110 zu legen und diese auf diese Weise zu blockieren. Damit kann dann der Ablauftakt-Zähler 130 entfallen.

Vom Johnson-Zähler 120 werden nur die Ausgänge $Q_4$, $Q_5$, $Q_9$ und $C_{out}$ verwendet. Die hier während des Zeitraumes $T_6$ erscheinenden Signale sind in Fig. 10 in der fünften, vierten, dritten und zweiten Zeile von unten wiedergegeben.

Der erste am Ausgang $Q_4$ des Johnson-Zählers 120 erscheinende Impuls bleibt ohne Wirkung, da das UND-Gatter 145, dem er zugeführt wird, durch das seit Beginn des Leitungsabschnitt-Zyklus zurückgesetzte Flip-Flop 122 gesperrt ist. Auch der hierauf unmittelbar folgende Impuls am Ausgang $Q_5$ des Johnson-Zählers 120, der über das ODER-Gatter 146 dem Rücksetzeingang des Flip-Flops 122 zugeführt wird, hat keine Wirkung, da dieses Flip-Flop ja bereits zurückgesetzt ist. Der danach am Ausgang $Q_9$ des Johnson-Zählers 120 erscheinende Impuls wird durch das UND-Gatter 147 blockiert, das über ein ODER-Gatter 149 mit den auf logisch 0 liegenden Ausgängen $Q_1$ und $Q_2$ eines ebenfalls zurückgesetzten Messstellen-Taktzählers 148 verbunden ist.

Der hierauf am Ausgang $C_{out}$ des Johnson-Zählers 120 erscheinende Impuls gelangt an den Takteingang des Flip-Flops 122, dessen D-Eingang ständig auf logisch 1 liegt, so dass nunmehr das Flip-Flop mit seinem Q-Ausgang auf logisch 1 gesetzt wird, wie dies in der untersten Zeile von Fig. 10 zu sehen ist. Der mit diesem Q-Ausgang verbundene Puffer 150, der im Ausführungsbeispiel nach Fig. 9 als invertierender Puffer ausgebildet ist, geht zu diesem Zeitpunkt mit seinem Ausgangssignal auf logisch 0, was den ersten Messstellen-Takt-Impuls auf der Leitung 17 einleitet (Für die in Fig. 2 dargestellte Ausführungsform der Anwahlstellen 15 und der Messstellen 5 muss auch der Puffer 150 nicht-invertierend sein).

Dieser erste Messstellen-Takt-Impuls, veranlasst sämtliche Messstellen-Flip-Flops 25 bzw. 45 die an ihrem D-Eingängen anliegende Information an ihrem Q-Ausgang zu übernehmen.

Dabei hat nur ein einziges der D-Flip-Flops 25 bzw. nur eine einzige Gruppe der D-Flip-Flops 45 an ihrem D-Eingang eine logische 1, nämlich das Flip-Flop bzw. die Flip-Flop-Gruppe der ersten auf die angewählte Anwahlstelle 15 folgenden Messstelle 5. Alle anderen D-Flip-Flops sind und bleiben an ihrem Q-Ausgang auf logisch 0.

Das D-Flip-Flop 28 der angewählten Anwahlstelle 15 erhält den ersten Messstellen-Takt-Impuls über das ODER-Gatter 35 und übernimmt die an seinem D-Eingang anliegende logische 0, so dass in das nachfolgende Schieberegister nur eine einzige logische 1 eingeschoben wird.

Der nächste am Ausgang $Q_4$ des Johnson-Zählers 120 erscheinende Impuls gelangt durch das nun offene UND-Gatter 145 einerseits an den Takteingang des Messstellen-Taktzählers 148, dessen Zählwert somit um eins erhöht wird, und anderseits an den einen Eingang eines UND-Gatters 154, an dessen anderem Eingang das vom Komparator 87 über die Leitung 93 abgegebene Signal anliegt, das solange auf logisch 0 bleibt, solange der Komparator nicht das Erreichen einer Pseudomessstelle erkannt hat, deren Messfühler 20 durch einen Metallschicht-Widerstand 29 ersetzt ist. Da zum gegenwärtigen Zeitpunkt erst die erste Messstelle des betrachteten Leitungsabschnittes angewählt ist und der betrachtete Leitungsabschnitt wenigstens eine mit einem Messfühler 20 ausgestattete Messstelle umfasst, ist das UND-Gatter 154 also gesperrt und gibt an seinem Ausgang kein Signal ab.

Der nächste am Ausgang $Q_5$ des Johnson-Zählers 120 erscheinende Impuls gelangt über das ODER-Gatter 146 an den Rücksetzeingang des Flip-Flops 122, an dessen Q-Ausgang somit wieder eine logisch 0 erscheint. Damit ist der erste Messstellen-Taktimpuls beendet.

Der nächste am $Q_9$-Ausgang des Johnson-Zählers 120 erscheinende Impuls kann nun über das UND-Gatter 147 und die Leitung 85 die Sample-and-Hold-Schaltung zur Übernahme des vom Operationsverstärker 106 abgegebenen Messwertes veranlassen, da am $Q_1$-Ausgang des Messstellen-Taktzählers 148 eine logische 1 anliegt, die über das ODER-Gatter 149 das UND-Gatter 147 aufsteuert. Letzteres bleibt nun solange geöffnet, bis der Messstellen-Taktzähler 148 wieder auf 0 zurückgesetzt wird, da einer der beiden Ausgänge

$Q_1$ und $Q_2$ bei allen anderen Zählzuständen immer eine logische 1 aufweist.

Der zeitliche Abstand zwischen diesem am $Q_9$-Ausgang des Johnson-Zählers 120 erscheinenden Impuls zur Steuerung der Sample-and-Hold-Schaltung 82 und dem vorausgehenden Impuls am $C_{out}$-Ausgang des Johnson-Zählers 120, der ja die wirksame Vorderflanke des zugehörigen Messstellen-Taktimpulses erzeugt und somit das Schliessen der in der angewählten Messstelle 5 enthaltenen Schalteranordnung 21 bewirkt hat, ist so gross, dass diese Schalteranordnung 21 sich mit Sicherheit im eingeschwungenen Zustand, d.h. auf ihrem niedrigsten Widerstandswert befindet, und somit die Übernahme eines zuverlässigen Messwertes in die Sample-and-Hold-Schaltung 82 gewährleistet.

Die Erzeugung der Messstellen-Taktimpulse wird nun solange fortgesetzt, bis entweder der Komparator 87 das Erreichen einer Pseudo-Messstelle anzeigt, wodurch das UND-Gatter 154 beim Auftreten eines Impulses am $Q_4$-Ausgang des Johnson-Zählers 120 ein Signal an das ODER-Gatter 151 abgibt oder bis ein mit den Ausgängen $Q_1$ bis $Q_n$ des Messstellen-Taktzählers 148 verbundener Dekoder 152 das Erreichen der maximal pro Leitungsabschnitt vorhandenen Messstellenzahl erkennt und ein entsprechendes Signal an das ODER-Gatter 151 weiterleitet. In beiden Fällen wird durch das vom ODER-Gatter 151 abgegebene Signal ein Reset-Monoflop 153 zur Abgabe eines Rücksetzt-Impulses veranlasst, der über das ODER-Gatter 129 mit Ausnahme des Adressen-Zählers 115 alle Einheiten der in Fig. 9 dargestellten Schaltungsanordnung wieder in den zurückgesetzten Zustand versetzt, wie dies zuvor für den vom Start-Monoflop 124 abgegebenen Impuls beschrieben wurde. Damit kann dann der nächste Leitungsabschnitt-Zyklus beginnen.

Lediglich der Adressen-Zähler 115 darf nicht zurückgesetzt werden, da er ja bei der nächsten auftretenden Zeit $T_1$, d.h. also beim Erscheinen einer logischen 1 am Ausgang $Q_1$ der Ablaufsteuerung 110 seinen Zählwert um eins erhöhen muss, um die Adresse für die nächste anzuwählende Anwahlschaltung 15 zu liefern.

Die eben beschriebenen Leitungsabschnitt-Zyklen werden solange fortgesetzt, bis ein dem Adressen-Zähler 115 nachgeschalteter Dekoder 153 erkennt, dass die im Adressen-Zähler 115 enthaltene Zahl gleich der in der gesamten Messanordnung vorhandenen Zahl von Leitungsabschnitten ist. Daraufhin gibt der Dekoder 153 ein entsprechendes Signal über das ODER-Gatter 128 ab, durch welches das Start-Monoflop 124 zur Abgabe eines Rücksetzimpulses veranlasst wird, der wie beim Einschalten der gesamten Anordnung nunmehr auch den Adressen-Zähler 115 auf 0 zurücksetzt, so dass beim nächsten Taktsignal, das dieser Adressen-Zähler 115 erhält, wieder die Adresse der ersten Anwahlschaltung 15 erzeugt wird.

Für die in den Figuren dargestellten Schaltungsanordnungen können die nachfolgend aufgeführten Bauelemente verwendet werden, die unter den angegebenen Bezeichnungen beispielsweise von den Firmen Motorola, RCA, Analog-Devices bzw. Datelec angeboten werden:

| Invertierender Schmitt-Trigger 38, 39, 40, 44, 46 | MC 14584 BCP |
| Invertierende Puffer 41, 50, 140, 141, 150 | MC 14049 BCP |
| D-Flip-Flop 28, 45, 70, 71, 122, 132 | MC 14013 BCP |
| 3-aus-5-Majoritäts-Logikschaltung 48, 72, 73 | MC 14530 BCP |
| Analogschalter 21, 52 bis 57, 61, 63 | MC 14016 BCP |
| Programmierbarer Rückwärtszähler 30, 117, 130 | MC 14526 BCP |
| ODER-Gatter 35, 36, 37, 128, 129, 136, 139, 146, 149, 151 | MC 14071 BCP |
| UND-Gatter 133, 134, 135, 138, 145, 147, 154 | MC 14081 BCP |
| Monoflop 124, 153 | MC 14528 BCP |
| Johnson-Zähler 110, 113, 120 | MC 14017 BCP |
| Vorwärtszähler 115, 148 | MC 14520 BCP |

Bei den bisher genannten Bauelementen handelt es sich ausschliesslich um integrierte CMOS-Halbleiterbauelemente.

| Operationsverstärker 81, 97, 103, 106 | AD-741-LN |
| Sample-and-Hold-Schaltung | SHM-IC-1 (Datelec) |

**Patentansprüche**

1. Messanordnung mit einer Vielzahl von miteinander und mit einer Steuer- und Messzentrale (2) durch ein Kabel (1) verbundenen Messstellen (5), von denen jede wenigstens einen Messfühler (20), der seinen elektrischen Widerstand in Abhängigkeit von einem physikalischen Umgebungsparameter ändert, eine Schalteranordnung (21), die den Messfühler (20) im geschlossenen Zustand über eine Ader (22) des Kabels (1) mit einer gemeinsamen Energiequelle (80) in der Steuer- und Messzentrale (2) verbindet, und eine Steuerschaltung (25) umfasst, die die Schalteranordnung (21) für jeden Messvorgang kurzzeitig schliesst und dann wieder öffnet, dadurch gekennzeichnet, dass für jeden jeweils mehrere Messstellen (5) umfassenden Kabelabschnitt (7 bis 13) eine von der Steuer- und Messzentrale (2) einzeln aktivierbare Anwahlschaltung (15) vorgesehen ist, dass die Steuerschaltung (25) einer jeden Messstelle (5) als Schieberegisterstufe aufgebaut ist, wobei das Schliessen der zugehörigen Schalteranordnung (21) durch das Erscheinen eines vorgegebenen Logikpegels (L) an wenigstens einem Ausgang (Q) der Schieberegisterstufe erfolgt, dass die Steuerschaltungen (25) aller innerhalb eines Kabelabschnittes (7 bis 13) angeordneten Messstellen (5) jeweils zur Bildung eines Schieberegisters miteinander verbunden sind und

dass nach Aktivierung einer Anwahlschaltung (15) der vorgebbare Logikpegel (L) in die erste Stufe des zugehörigen Schieberegisters eingebbar und durch ein von der Steuer- und Messzentrale (2) allen Messstellen (5) gemeinsam zugeführtes Taktsignal von Stufe zu Stufe weiterschiebbar ist.

2. Messanordnung nach Anspruch 1, dadurch gekennzeichnet, dass die Steuerschaltung einer jeden Messstelle (5) von einer bistabilen Kippstufenanordnung (25; 45) gebildet ist und dass die bistabilen Kippstufenanordnungen (25; 45) der Messstellen (5) durch ein von der Steuer- und Messzentrale (2) zugeführtes Reset-Signal gemeinsam in den Zustand rücksetzbar sind, in welchem der dem vorgegebenen Logikpegel (L) entgegengesetzte und somit ein Öffnen der Schalteranordnung (21) bewirkende Logikpegel (O) an dem wenigstens einen Ausgang (Q) der bistabilen Kippstufenanordnung (25; 45) erscheint.

3. Messanordnung nach Anspruch 2, dadurch gekennzeichnet, dass die erste Stufe des Schieberegisters von einer in der Anwahlschaltung (15) angeordneten bistabilen Kippstufenanordnung (28) gebildet ist.

4. Messanordnung nach Anspruch 3, dadurch gekennzeichnet, dass die bistabile Kippstufenanordnung (28) der Anwahlschaltung (15) von einem D-Flip-Flop gebildet ist, das nach Aktivierung der Anwahlschaltung (15) durch von der Steuer- und Messzentrale abgegebene Signale so steuerbar ist, dass für genau einen Taktsignalimpuls der weiterzuschiebende vorbestimmte Logikpegel an dem mit der bistabilen Kippstufenanordnung (25; 45) der nachfolgenden Messstelle (5) verbundenen Ausgang des D-Flip-Flops (28) erscheint.

5. Messanordnung nach einem der vorhergehenden Ansprüche, dadurch gekennzeichnet, dass jede Anwahlschaltung (15) eine die von der Steuer- und Messzentrale (2) zur Aktivierung einer einzelnen Anwahlschaltung (15) auf einer Ader (16) des Kabels (1) an alle Anwahlschaltungen (15) gesandte Adressen-Information erfassende, mit einer in der jeweiligen Anwahlschaltung (15) fest eingespeicherten Adresse vergleichende und bei Übereinstimmung ein Aktivierungssignal erzeugende Dekodiereinrichtung (30) umfasst.

6. Messanordnung nach Anspruch 6, dadurch gekennzeichnet, dass die Dekodiereinrichtung ein unter Steuerung eines von der Steuer- und Messzentrale (2) vor Aussendung der Adressen-Information abgegebenen Signals die an seinen Programmiereingängen fest vorgegebene Adresse seiner Anwahlschaltung (15) als Ausgangs-Zählwert einlesender Rückwärtszähler (30) ist, dessen Takteingang mit der die Adressen-Information von der Steuer- und Messzentrale (2) in Form eines eine vorgegebene Anzahl von Impulsen umfassenden Impulszuges weiterleitenden Ader (16) des Kabels (1) verbunden ist und an dessen den Dateneingang des D-Flip-Flops (28) ansteuernden Überlaufausgang beim Erreichen des Zählerstandes «Null» der im Schieberegister weiterzuleitende Logikpegel erscheint.

7. Messanordnung nach Anspruch 6, dadurch gekennzeichnet, dass zwischen den Überlaufausgang des Rückwärtszählers (30) und den Dateneingang des D-Flip-Flops (28) ein Verzögerungsglied (34) geschaltet ist, dass der zur Übernahme des an den Programmiereingängen vorgegebenen Zahlenwertes anzusteuernde PE-Eingang des Rückwärtszählers (30) und der Takteingang des D-Flip-Flops (28) gemeinsam durch einen von der Steuer- und Messzentrale (2) nach der Aussendung der Adressen-Information auf einer Ader (32) des Kabels (1) abgegebenen Impuls ansteuerbar sind, und dass der Takteingang des D-Flip-Flops (28) mit der den nach der Aussendung der Adressen-Information von der Steuer- und Messzentrale (2) abgegebenen Impuls führenden Ader (32) des Kabels (1) über ein ODER-Gatter (35) verbunden ist, über dessen zweiten Eingang ihm die von der Steuer- und Messzentrale (2) über die entsprechende Ader (17) des Kabels (1) abgegebenen Messstellen-Taktimpulse zuführbar sind.

8. Messanordnung nach einem der vorhergehenden Ansprüche, dadurch gekennzeichnet, dass die bistabilen Kippstufenanordnungen der Messstellen (5) jeweils von einem D-Flip-Flop (25) gebildet sind, das mit seinem Rücksetzeingang an die von der Steuer- und Messzentrale (2) mit Reset-Signalen beaufschlagte, auch den PE-Eingang des Rückwärtszählers (30) und den Takteingang des D-Flip-Flops (28) einer jeden Anwahlschaltung (15) ansteuernde Ader (32) und mit seinem Takteingang an die von der Steuer- und Messzentrale (2) mit den Messstellen-Taktsignalen beaufschlagte Ader (17) des Kabels (1) angeschlossen ist, und dessen D-Eingang über einen Abschnitt (26) einer weiteren Ader des Kabels (1) mit dem Q-Ausgang des D-Flip-Flops (28, 25) der im Schieberegister vorausgehenden Stufe verbunden ist, während sein Q-Ausgang zumindest mit dem Steuereingang der sich beim Anlegen einer logischen 1 schliessenden Schalteranordnung (21) der eigenen Messstelle (5) in Verbindung steht.

9. Messanordnung nach einem der Ansprüche 1 bis 7, dadurch gekennzeichnet, dass die bistabilen Kippstufenanordnungen der Messstellen (5) jeweils von mehreren D-Flip-Flops (45) gebildet sind, deren Takteingänge und Rücksetzeingänge jeweils parallel von den entsprechenden Signalen der Steuer- und Messzentrale (5) ansteuerbar sind und deren Q-Ausgänge mit den Eingängen einer in der Steuerschaltung der Messstelle (5) vorgesehenen Majoritäts-Logikanordnung (48) verbunden sind, die mit ihren Ausgangssignalen die Schalteranordnung (21) der Messstelle (5) steuert.

10. Messanordnung nach Anspruch 9, dadurch gekennzeichnet, dass die Dateneingänge der mehreren D-Flip-Flops (45) einer jeden nicht unmittelbar auf die Anwahlschaltung (15) folgenden Messstelle (5) einzeln über einen Abschnitt (26) einer zugehörigen Ader des Kabels (1) von jeweils einem Ausgang der Majoritäts-Logikanordnung (48) der vorausgehenden Messstelle (5) ansteuerbar sind und dass die Dateneingänge der mehreren D-Flip-Flops (45) einer unmittelbar auf die Anwahlschaltung (15) folgenden Messstelle gemeinsam über einen Abschnitt (26) einer Ader des Kabels (1) vom Q-Ausgang des D-Flip-Flops (28) der Anwahlschaltung (15) ansteuerbar sind.

11. Messanordnung nach Anspruch 10, dadurch gekennzeichnet, dass die bistabile Kippstufenanordnung (45) einer jeden Messstelle (5) fünf parallel betreibbare D-Flip-Flops umfasst und dass die Majoritäts-Logikanordnung (48) aus fünf 3-aus-5-Majoritäts-Logik-Gattern besteht.

12. Messanordnung nach einem der Ansprüche 9 oder 10, dadurch gekennzeichnet, dass die Schalteranordnung (21) einer jeden Messstelle (5) aus mehreren Schaltern (52 bis 57) besteht, die in wenigstens zwei zueinander parallelen Gruppen zwischen eine der eine Verbindung zur Energiequelle (80) der Steuer- und Messzentrale (2) herstellenden Adern (22, 23) des Kabels (1) und den Messfühler (20) der Messstelle (5) geschaltet sind, wobei jede der Gruppen mehrere zueinander in Serie liegende Schalter umfasst.

13. Messanordnung nach Anspruch 12, dadurch gekennzeichnet, dass die Schalteranordnung (21) aus zwei zueinander parallelen Gruppen besteht, von denen jede drei hintereinander geschaltete Schalter (52 bis 57) umfasst und dass in der einen Gruppe jeder der Schalter (53, 54, 57) und in der anderen Gruppe einer der Schalter (52) einzeln von einem Ausgang der Majoritäts-Logikanordnung (48) ansteuerbar sind, während die Steuereingänge der beiden restlichen Schalter (55, 56) gemeinsam mit einem fünften Ausgang der Majoritäts-Logikanordnung (48) verbunden sind.

14. Messanordnung nach einem der vorhergehenden Ansprüche, dadurch gekennzeichnet, dass die Schalteranordnungen (21) von kontaktlosen Halbleiterschaltern gebildet sind und dass die Schalteranordnungen (21) einer Vielzahl von Messstellen (5) dadurch zu Untergruppen zusammengefasst sind, dass sie mit ihren nicht mit dem zugehörigen Messfühler (20) verbundenen Anschlüssen an einen Abschnitt (60) einer Ader des Kabels (1) gelegt sind, der über eine somit einen höheren hierarchischen Rang besitzende Schalteranordnung (61) mit der die Messenergie von der Steuer- und Messzentrale (2) zuführenden oder zu dieser zurückleitenden Ader (22 bzw. 23) des Kabels (1) verbindbar ist.

15. Messanordnung nach Anspruch 14, dadurch gekennzeichnet, dass die Schalteranordnungen (61) einer Vielzahl von Untergruppen dadurch zu Gruppen zusammengefasst sind, dass sie mit ihren nicht zu den zugehörigen Messfühlern (20) führenden Anschlüssen an einen Abschnitt (62) einer weiteren Ader des Kabels (1) gelegt sind, der über eine somit einen noch höheren hierarchischen Rang besitzende Schalteranordnung (63) mit der die Messenergie von der Steuer- und Messzentrale (2) zuführenden bzw. zu dieser zurückführenden Ader (22 bzw. 23) des Kabels (1) verbindbar ist.

16. Messanordnung nach Anspruch 14 oder 15, dadurch gekennzeichnet, dass jede Messstelle (5) drei miteinander in Serie liegende Schalteranordnungen umfasst, von denen die eine (21) zur untersten, die zweite (61) zur mittleren und die dritte (63) zur obersten hierarchischen Ebene gehört, dass in jedem Leitungsabschnitt (7 bis 13) bei der ersten, $(n^2 + 1)$-ten, $(2n^2 + 1)$-ten usw. auf die zugehörige Anwahlschaltung folgenden Messstelle (5) jeweils der freie Anschluss der den höchsten hierarchischen Rang aufweisenden Schalteranordnung (63) an die die Messenergie von der Steuer- und Messzentrale (2) zuleitende oder zu dieser zurückleitende Ader (22 bzw. 23) über eine erste Verbindung (68) angeschlossen ist, der Verbindungspunkt zwischen der Schalteranordnung (63) mit dem höchsten und der Schalteranordnung (61) mit dem mittleren hierarchischen Rang an den zugehörigen Adernabschnitt (62) über eine zweite Verbindung (67) angeschlossen ist und der Verbindungspunkt zwischen der Schalteranordnung (61) mit dem mittleren und der Schalteranordnung (21) mit dem untersten hierarchischen Rang an den zugehörigen Adernabschnitt (60) über eine dritte Verbindung (66) angeschlossen ist, dass bei jeder $(n + 1)$-ten, $(2n + 1)$-ten, $(3n + 1)$-ten usw. Messstelle (5) die erste (68) dieser drei Verbindungen (66, 67, 68) weggelassen aber die zweite (67) und die dritte (66) vorgesehen ist, und dass bei allen übrigen Messstellen nur die dritte Verbindung (66) vorgesehen, die erste (68) und die zweite (67) aber weggelassen sind.

17. Messanordnung nach Anspruch 16, dadurch gekennzeichnet, dass jede Messstelle (5) auch die jeweils zumindest aus einer bistabilen Kippstufenanordnung (70, 71) bestehende Steuerschaltung für die Schalteranordnungen (61, 63) der mittleren und höheren hierarchischen Ebene umfasst.

18. Messanordnung nach Anspruch 17, dadurch gekennzeichnet, dass die die Schalteranordnungen (61, 63) der mittleren und höheren hierarchischen Ebenen ansteuernden bistabilen Kippstufenanordnungen (70, 71) jeweils von mehreren parallel betriebenen D-Flip-Flops gebildet sind, deren Ausgangssignale den Steuereingängen der Schalteranordnungen (61, 63) über Majoritäts-Logikanordnungen (72, 73) zuführbar sind, dass die Daten- und Rücksetzeingänge der die bistabilen Kippstufenanordnungen (70, 71) für die Schalteranordnungen (61, 63) der mittleren und höheren hierarchischen Ebenen bildenden D-Flip-Flops mit den Daten- und Rücksetzeingängen der die bistabile Kippstufenanordnung (45) für die Schalteranordnung (21) der untersten hierarchischen Ebene bildenden D-Flip-Flops verbunden sind und dass die Takteingänge der D-Flip-Flops (71) für die Schalteranordnungen (63) der obersten hierarchischen Ebene durch die auf einer eigenen Ader (77) des Kabels (1) von der Steuer- und Messzentrale kommenden Gruppen-Taktsignale und die Takteingänge der D-Flip-Flops (70) für die Schalteranordnung (61) der mittleren hierarchischen Ebene durch die auf einer weiteren Ader (75) des Kabels (1) von der Steuer- und Messzentrale (2) kommenden Untergruppen-Taktsignale ansteuerbar sind.

19. Messanordnung nach einem der vorhergehenden Ansprüche, dadurch gekennzeichnet, dass in der Messstelle (5), deren bistabile Kippstufenanordnung (25; 45) jeweils die letzte Stufe eines Schieberegisters bildet, der Messfühler (20) durch einen Festwiderstand (29) ersetzt ist, dessen Widerstandswert sich deutlich von den durch die Messfühler (20) im vorgesehenen Messbereich annehmbaren Widerstandswerten unterscheidet und dass in der Steuer- und Messzentrale (2) eine beim Auftreten eines diesem deutlich verschiedenen Widerstandswert entsprechenden Messwertes die Anwahl eines neuen Leitungsabschnittes (7 bis 13) auslösende Schaltungsvorrichtung (87, 150, 153) vorgesehen ist.

20. Messanordnung nach einem der vorhergehenden Ansprüche, dadurch gekennzeichnet, dass die die Messenergie für den jeweils durch seine geschlossene Schalteranordnung (21) mit den Zu- und Rückführadern (22, 23) des Kabels (1) verbundenen Messfühler liefernde Energiequelle eine in der Steuer- und Messzentrale (2) angeordnete Konstantstromquelle (80) ist, die von einer den von dem jeweils angesteuerten Messfühler (20) über die entsprechende Ader (23) des Kabels (1) zurückfliessenden Strom messenden und auf einen vorgegebenen, konstanten Wert einregelnden Schaltungsanordnung (97, 98, 99, 100, 101) gebildet ist.

21. Messanordnung nach Anspruch 20, dadurch gekennzeichnet, dass die den Messstrom regelnde Schaltungsanordnung von einem Operationsverstärker (97) gebildet ist, dessen erster Eingang über einen Spannungsteiler (98, 99, 100) an eine fest vorgegebene Referenzspannung gelegt ist, dessen zweiter Eingang mit der den Messstrom von den Messfühlern (20) zurückführenden Ader (23) des Kabels (1) und über einen Festwiderstand (101) mit der Systemmasse verbunden ist und dessen Ausgang mit den Messstrom den Messfühlern (20) zuführende Ader (22) des Kabels (1) mit einem Strom speist, dessen Stärke auf einen solchen Wert geregelt ist, dass er beim Zurückfliessen über die Ader (23) am Festwiderstand (101) denselben Spannungsabfall erzeugt, den der erste Eingang des Operationsverstärkers (97) am Spannungsteiler (98, 99, 100) abgreift.

22. Messanordnung nach Anspruch 21, dadurch gekennzeichnet, dass ein aus der Spannungsdifferenz zwischen dem Ausgang und dem zweiten Eingang des Operationsverstärkers (97) einen weiterzuverarbeitenden Messwert erzeugender Differenzverstärker (81) mit hoher Gleichtaktsignalunterdrückung vorgesehen ist, dass zwischen den mit dem zweiten Eingang des Operationsverstärkers (97) in Verbindung stehenden Messpunkt (MP2) und den zugehörigen Eingang des Differenzverstärkers (81) ein die Verstärkung «Eins» besitzender Impedanzwandler (103) geschaltet ist, dessen Ausgangswiderstand in etwa dem Ausgangswiderstand des Operationsverstärkers (97) entspricht, und dass dem Differenzverstärker (81) ein vom Messsignal einen fest vorgebbaren Sokkelbetrag abziehendes differenzbildendes Glied (106) nachgeschaltet ist.

23. Messanordnung nach einem der vorhergehenden Ansprüche, dadurch gekennzeichnet, dass ein das Messergebnis vor der weiteren Auswertung übernehmender Zwischenspeicher (82) vorgesehen ist und dass der Zwischenspeicher (82) durch die das Messstellen-Taktsignal erzeugende Schaltungseinheit (120) so ansteuerbar ist, dass er das Messergebnis nur dann übernimmt, wenn die Schalteranordnung (21) des betreffenden Messfühlers (20) mit Sicherheit vollständig geschlossen ist.

## Claims

1. Measuring arrangement with a plurality of measuring units (5) connected to each other and to a control and measuring centre (2) by a cable (1), each of the measuring units comprising at least one sensor (20) which changes its electric resistance dependent on a physical ambient parameter, a switch arrangement (21) which in its closed state connects the sensor (20) via a wire (22) of the cable (1) to a common energy source (80) in the control and measuring centre (2), and a control circuit (25) which closes the switch arrangement (21) for a short period of time for each measuring operation and then opens it again, characterized in that for each cable section (7 to 13) comprising in each case several measuring units (5) a selectable circuit (15) is provided which can be independently activated from the control and measuring centre (2), in that the control circuit (25) of each measuring unit (5) is designed as a shift register stage, whereby the closing of the corresponding switch arrangement (21) is effected by the appearance of a predetermined logic level (L) at at least one output (Q) of the shift register stage, in that the control circuits (25) of all the measuring units (5) which are arranged within one cable section (7 to 13), respectively are connected to each other for forming a shift register, and in that, after activation of a selectable circuit (15), the predeterminable logic level (L) can be inputted into the first stage of the corresponding shift register and can be shifted further from stage to stage by a clock signal which is commonly transmitted from the control and measuring centre (2) to all measuring units (5).

2. A measuring arrangement according to claim 1, characterized in that the control circuit of each measuring unit (5) is comprised of a flip-flop arrangement (25; 45) and in that the flip-flop arrangements (25; 45) of the measuring units (5) are commonly resettable by a reset signal transmitted from the control and measuring centre (2) into a state, in which the logic level (O) which is opposite to the predetermined logic level (L) and, therefore, causes the opening of the switch arrangement (21) appears at the at least one output (Q) of the flip-flop arrangement (25; 45).

3. A measuring arrangement according to claim 2, characterized in that the first stage of the shift register is formed by a flip-flop arrangement (28) arranged in the selectable circuit (15).

4. A measuring arrangement according to claim 3, characterized in that the flip-flop arrangement (28) of the selectable circuit (15) is formed by a D-flip-flop which, after activation of the selectable circuit (15), is controllable by signals emitted by the control and measuring centre, such that, for exactly one clock signal pulse, the predetermined logic level to be shifted further appears at the output of the D-flip-flop (28) connected to the flip-flop arrangement (25; 45) of the following measuring unit (5).

5. A measuring arrangement according to anyone of the preceding claims, characterized in that each selectable circuit (15) comprises a decoding device (30) which detects the address information sent to all selectable circuits (15) from the control and measuring centre (2) along a wire (16) of the cable (1) for activating an individual selectable circuit (15), and which compares said information with an address which is fixedly stored in the respective selectable circuit (15), and which produces an activating signal if both data coincide.

6. A measuring arrangement according to claim 5, characterized in that the decoding device is a down counter (30) which reads in the address of its selectable circuit (15) fixedly predetermined at its programming inputs under control of a signal emitted by the control and measuring centre (2) before the emission of the address information to obtain a basis count value, the clock input of which is connected to the wire (16) of the cable (1) which transmits the address information from the control and measuring centre (2) in the form of a pulse chain comprising a predetermined number of pulses, and at the overflow output of which, controlling the data input of the D-flip-flop (28), the logic level to be further shifted in the shift register appears when the count "zero" has been attained.

7. A measuring arrangement according to claim 6, characterized in that a delay member (34) is connected between the overflow output of the down counter (30) and the data input of the D-flip-flop (28), in that the PE-input of the down counter (30), to be triggered for taking over the count predetermined at the programming inputs, and the clock input of the D-flip-flop (28) can be commonly triggered by a pulse emitted by the control and measuring centre (2) on a wire (32) of the cable (1) after emission of the address information, in that the clock input of the D-flip-flop (28) is connected via an OR-gate (35) to the wire (32) of the cable (1) forwarding the pulse emitted by the control and measuring centre (2) after emission of the address information, and in that through the second input of said OR-gate the measuring unit clock pulses emitted by the control and measuring centre (2) via the corresponding wire (17) of the cable (1) can be fed to said clock input.

8. A measuring arrangement according to anyone of the preceding claims, characterized in that the flip-flop arrangements of the measuring units (5) are each formed by a D-flip-flop (25) which is connected with its reset input to the wire (32) provided with the reset signals by the control and measuring centre (2) and also controlling the PE-input of the down counter (30) and the clock input of the D-flip-flop (28) of each selectable circuit (15), and which is connected with its clock input to the wire (17) of the cable (1) provided with the measuring unit clock signals by the control and measuring centre (2), and the D-input of which is connected via a section (26) of a further wire of the cable (1) to the Q-output of the D-flip-flop (28, 25) of the stage preceding in the shift register, wile its Q-output is connected at least to the control input of the switch arrangement (21), which closes upon application of a logical 1, of its own measuring unit (5).

9. A measuring arrangement according to either of claims 1 to 7, characterized in that the flip-flop arrangements of the measuring units (5) are each formed by several D-flip-flops (45) the clock inputs and reset inputs of which are in each case triggerable in parallel by the corresponding signals of the control and measuring centre (2), and the Q-outputs of which are connected to the inputs of a majority logic arrangement (48) provided in the control circuit of the measuring unit (5), said arrangement (48) controlling the switch arrangement (21) of the measuring unit (5) by its output signals.

10. A measuring arrangement according to claim 9, characterized in that the data inputs of the several D-flip-flops (45) of each measuring unit (5) not directly following the selectable circuit (15) are each individually controllable via a section (26) of a corresponding wire of the cable (1) by one output of the majority logic arrangement (48) of the preceding measuring unit (5), and in that the data inputs of the several D-flip-flops (45) of a measuring unit directly following the selectable circuit (15) are commonly controllable via a section (26) of a wire of the cable (1) by the Q-output of the D-flip-flop (28) of the selectable circuit (15).

11. A measuring arrangement according to claim 10, characterized in that the flip-flop arrangement (45) of each measuring unit (5) comprises five D-flip-flops operable in parallel, and in that the majority logic arrangement (48) consists of five 3-out-of-5 majority logic gates.

12. A measuring arrangement according to one of claims 9 or 10, characterized in that the switch arrangement (21) of each measuring unit (5) comprises a plurality of switches (52 to 57) which are connected in at least two parallel groups between one of the wires (22, 23) of the cable (1), which provide a connection to the energy source (80) of the control and measuring centre (2), and the sensor (20) of the measuring unit (5), each of the groups comprising several switches which are in series with respect to one another.

13. A measuring arrangement according to claim 12, characterized in that the switch arrangement (21) comprises two parallel groups, each of which comprises three switches (52 to 57) connected in series, and in that in the one group each of the switches (53, 54, 57) and in the other group one of the switches (52) are individually controllable by one output of the majority logic arrangement (48), while the control inputs of the two remaining switches (55, 56) are commonly connected to a fifth output of the majority logic arrangement (48).

14. A measuring arrangement according to either of the preceding claims, characterized in that the switch arrangements (21) are formed by contactless semiconductor switches, and in that the switch arrangements (21) of a plurality of measuring units (5) are combined to form sub-groups by the fact, that they are connected with their terminals, which are not connected to the corresponding sensor (20), to a section (60) of a wire of the cable (1), which section can be connected via a switch arrangement (61), thus having a higher hierarchic level, to the wire (22 or 23) of the cable (1) which carries forward the measuring energy from the control and measuring centre (2) or, respectively, carries it back to the latter.

15. A measuring arrangement according to claim 14, characterized in that the switch arrangements (61) of a plurality of sub-groups are combined to form groups by the fact, that they are connected with their terminals not leading to the corresponding sensors (20), to a section (62) of a further wire of the cable (1), which section can be connected via a switch arrangement (63), thus having an even higher hierarchic level, to the wire (22 or 23) of the cable (1) which carries forward the measuring energy from the control and measuring centre (2) or, respectively, carries it back to the latter.

16. A measuring arrangement according to claim 14 or 15, characterized in that each measuring unit (5) comprises three switch arrangements connected in series, of which the one (21) belongs to the lowest, the second (61) belongs to the middle and the third (63) belongs to the highest hierarchic level, in that in each cable section (7 to 13), in the case of the first, $(n^2 + 1)$-th, $(2n^2 + 1)$-th, etc. measuring unit (5) following the respective selectable circuit, the free terminal of the switch arrangement (63) having the highest hierarchic level is connected via a first connection (68) to the wire (22 or 23) which carries forward the measuring energy from the control and measuring centre (2) or, respectively, carries it back to the latter, the connection point between the switch arrangement (63) with the highest hierarchic level and the switch arrangement (61) with the middle hierarchic level is connected via a second connection (67) to the corresponding wire section (62), and the connection point between the switch arrangement (61) with the middle hierarchic level and the switch arrangement (21) with the lowest hierarchic level is connected via a third connection (66) to the corresponding wire section (60), in that in the case of each $(n + 1)$-th, $(2n + 1)$-th, $(3n + 1)$-th, etc. measuring unit (5), the first (68) of these three connections (66, 67, 68) is omitted, but the second (67) and the third (66) are provided, and in that in the case of all remaining measuring units, only the third connection (66) is provided, while the first (68) and the second (67) are omitted.

17. A measuring arrangement according to claim 16, characterized in that each measuring unit (5) also comprises the control circuit for the switch arrangements (61, 63) of the middle and higher hierarchic levels, that control circuit comprising in each case at least one flip-flop arrangement (70, 71).

18. A measuring arrangement according to claim 17, characterized in that the flip-flop arrangements (70, 71), which control the switch arrangements (61, 63) of the middle and higher hierarchic levels, are each formed by several D-flip-flops operated in parallel, the output signals of which can be transmitted to the control inputs of the switch arrangements (61, 63) via majority logic arrangements (72, 73), in that the data and reset inputs of the D-flip-flops, which form the flip-flop arrangements (70, 71) for the switch arrangements (61, 63) of the middle and higher hierarchic levels, are connected to the data and reset inputs of the D-flip-flops which form the flip-flop arrangement (45) for the switch arrangement (21) of the lowest hierarchic level, in that the clock inputs of the D-flip-flops (71) for the switch arrangements (63) of the highest hierarchic level can be triggered by group clock signals coming from the control and measuring centre on a separate wire (77) of the cable (1), and in that the clock inputs of the D-flip-flops (70) for the switch arrangement (61) of the middle hierarchic level can be triggered by subgroup clock signals coming from the control and measuring centre (2) on a further wire (75) of the cable (1).

19. A measuring arrangement according to either of the preceding claims, characterized in that in the measuring unit (5) the flip-flop arrangement (25, 45) of which forms the last stage of a shift register, the sensor (20) is replaced by a fixed resistor (29) the resistance value of which clearly differs from the resistance values which can be attained by the sensors (20) in the provided measuring range, and in that in the control and measuring centre (2) a circuit arrangement (87, 150, 153) is provided which triggers the selection of a new cable section (7 to 13) upon the appearance of a measuring value corresponding to this clearly differing resistance value.

20. A measuring arrangement according to one of the preceding claims, characterized in that the energy source, which provides the measuring energy for the sensor connected by its closed switch arrangement (21) to the forward and backward wires (22, 23) of the cable (1), is a constant current source (80) which is arranged in the control and measuring centre (2), and which is formed by a circuit arrangement (97, 98, 99, 100, 101) which measures the current flowing back via a corresponding wire (23) of the cable (1) from the respectively activated sensor (20) and which adjusts said current to a predetermined, constant value.

21. A measuring arrangement according to claim 20, characterized in that the circuit arrangement adjusting the measuring current is formed by an operational amplifier (97), the first input of which is connected by means of a voltage divider (98, 99, 100) to a fixedly predetermined reference voltage, the second input of which is connected to the wire (23) of the cable (1) carrying back the measuring current from the sensors (20), and is also connected via a fixed resistor (101) to the earth of the system, and the output of which feeds the wire (22) of the cable (1) forwarding the measuring current to the sensors (20) with a current the amount of which is adjusted to such a value that it produces the same voltage drop at the fixed resistor (101) when flowing back via the wire (23) as the first input of the operational amplifier (97) collects at the voltage divider (98, 99, 100).

22. A measuring arrangement according to claim 21, characterized in that a differential amplifier (81) having a high common-mode signal rejection capacity is provided which produces a measuring value to be further processed from the voltage difference between the output and the second input of the operational amplifier (97), in that an impedance converter (103) having unity gain is connected between the measuring point (MP2) connected to the second input of the operational amplifier (97) and the corresponding input of the differential amplifier (81), the output resistance of said impedance converter (103) corresponding approximately to the output resistance of the operational amplifier (97), and in that a subtracting member (106) is connected downstream of the differential amplifier (81) which subtracts a fixedly predetermined basis amount from the measuring signal.

23. A measuring arrangement according to either of the prededing claims, characterized in that an intermediate memory (82) is provided, which receives the measuring result before further evaluation takes place, and in that the intermediate memory (82) is controllable by the circuit unit (120) producing the measuring unit clock signal, such that it will only accept the measuring result if the switch arrangement (21) of the respective sensor (20) is with certainty completely closed.

## Revendications

1. Disposition de mesure munie de multiples lieux de mesure (5) reliés entre eux et à un central de commande et de mesure (2) par un câble (1), dont chacun comprend au moins un capteur (20) qui varie sa résistance électrique sous la dépendance d'un paramètre physique d'environnement, une disposition d'interrupteur (21) qui, dans l'état fermé, relie le capteur (20), par l'intermédiaire d'un conducteur (22) du câble (1), à une source d'énergie commune (80) du central de commande et de mesure (2), et un circuit de commande (25) qui ferme la disposition d'interrupteur (21) pendant peu de temps pour chaque processus de mesure et l'ouvre alors à nouveau, caractérisée en ce que pour chaque tronçon de câble (7 à 13) comprenant chaque fois plusieurs lieux de mesure (5) est prévu un circuit sélecteur (15) pouvant être activé individuellement par le central de commande et de mesure (2), en ce que le circuit de commande (25) de chacun des lieux de mesure (5) est constitué comme un étage de registre à décalage, la fermeture de la disposition d'interrupteur correspondante (21) s'effectuant par l'apparition d'un niveau logique prescrit (L) à au moins une sortie (Q) de l'étage de registre à décalage, en ce que les circuits de commande (25) de tous les lieux de mesure (5) disposés au sein d'un tronçon de câble (7 à 13) sont chaque fois reliés entre eux pour former un registre à décalage, et en ce qu'après activation d'un circuit sélecteur (15), le niveau logique pouvant être prescrit (L) peut être introduit dans le premier étage du registre à décalage correspondant et peut être encore décalé d'un étage à l'autre par un signal de rythme amené conjointement du central de commande et de mesure (2) à tous les lieux de mesure (5).

2. Disposition de mesure selon la revendication 1, caractérisée en ce que le circuit de commande de chacun des lieux de mesure (5) est formé par une disposition d'organe basculeur bistable (25; 45), et en ce que les dispositions d'organe basculeur bistable (25; 45) des lieux de mesure (5) peuvent être remises conjointement, par un signal de réarmement amené du central de commande et de mesure (2), dans l'état où le niveau logique (O) opposé au niveau logique prescrit (L) et provoquant donc une ouverture de la disposition d'interrupteur (21), apparaît à au moins une sortie (Q) de la disposition d'organe basculeur bistable (25; 45).

3. Disposition de mesure selon la revendication 2, caractérisée en ce que le premier étage du registre à décalage est formé par une disposition d'organe basculeur bistable (28) disposée dans le circuit sélecteur (15).

4. Disposition de mesure selon la revendication 3, caractérisée en ce que la disposition d'organe basculeur bistable (28) du circuit sélecteur (15) est formée par une bascule D qui, après activation du circuit sélecteur (15), peut être commandée par des signaux émis par le central de commande et de mesure, de telle sorte que, pour exactement une impulsion de signal de rythme, le niveau logique prédéterminé qu'il s'agit de décaler davantage apparaît à la sortie de la bascule D (28) qui est reliée à la disposition d'organe basculeur bistable (25; 45) du lieu de mesure suivant (5).

5. Disposition de mesure selon l'une des revendications précédentes, caractérisée en ce que chaque circuit sélecteur (15) comprend un dispositif de décodage (30) détectant l'information d'adresse envoyée par le central de commande et de mesure (2) à tous les circuits sélecteurs (15) pour activer un circuit sélecteur individuel (15), sur un conducteur (16) du câble (1), comparant cette information à une adresse mémorisée de façon fixe dans le circuit sélecteur respectif (15) et engendrant, en cas de concordance, un signal d'activation.

6. Disposition de mesure selon la revendication 5, caractérisée en ce que le dispositif de décodage est un compteur rétrograde (30) introduisant comme valeur de comptage de sortie, sous la commande d'un signal émis par le central de commande et de mesure (2) avant émission de l'information d'adresse, l'adresse de son circuit sélecteur (15) prescrite de façon fixe à ses entrées de programmation, compteur dont l'entrée de rythme est reliée au conducteur (16) du câble (1) qui achemine l'information d'adresse venant du central de commande et de mesure (2) sous la forme d'un train d'impulsions comprenant un nombre prescrit d'impulsions, et à la sortie de débordement duquel, commandant l'entrée de données de la bascule D (28) apparaît, lorsque le compte «zéro» est atteint, le niveau logique à acheminer dans le registre à décalage.

7. Disposition de mesure selon la revendication 6, caractérisée en ce qu'entre la sortie de débordement du compteur rétrograde (30) et l'entrée de données de la bascule D (28) est branché un organe de retard (34), en ce que l'entrée PE du compteur rétrograde (30), à commander pour reprendre la valeur numérique prescrite aux entrées de programmation, et l'entrée de rythme de la bascule D (28) peuvent être commandées conjointement par une impulsion émise par le central de commande et de mesure (2) après l'émission de l'information d'adresse, sur un conducteur (32) du câble (1), et en ce que l'entrée de rythme de la bascule D (28) est reliée au conducteur (32) du câble (1) qui conduit l'impulsion émise par le central de commande et de mesure (2) après l'émission de l'information d'adresse, par l'intermédiaire d'une porte OU (35) par la deuxième entrée de laquelle peuvent lui être amenées les impulsions de rythme de lieu de mesure émises par le central de commande et de mesure (2) par le conducteur correspondant (17) du câble (1).

8. Disposition de mesure selon l'une des revendications précédentes, caractérisée en ce que les dispositions d'organe basculant bistable des lieux de mesure (5) sont formées chaque fois par une bascule D (25) qui est raccordée par son entrée de réarmement au conducteur (32) qui est soumis par le central de commande et de mesure (2) à des signaux de réarmement et qui commande aussi l'entrée PE du compteur rétrograde (30) et l'entrée de rythme de la bascule D (28) de chacun des circuits sélecteurs (15) et par son entrée de rythme, au conducteur (17) du câble (1) qui est soumis par le central de commande et de mesure (2) aux signaux de rythme de lieu de mesure, et dont l'entrée D est reliée, par l'intermédiaire d'un tronçon (26) d'un autre conducteur du câble (1), à la sortie Q de la bascule D (28, 25) de l'étage qui précède dans le registre à décalage, tandis que sa sortie Q est en liaison au moins avec l'entrée de commande de la disposition d'interrupteur (21) de son propre lieu de mesure (5) qui se ferme lors de l'application d'un 1 logique.

9. Disposition de mesure selon l'une des revendications 1 à 7, caractérisée en ce que les dispositions d'organe basculeur bistable des lieux de mesure (5) sont formées chaque fois par plusieurs bascules D (45) dont les entrées de rythme et les entrées de réarmement peuvent chaque fois être commandées parallèlement par les signaux correspondants du central de commande et de mesure (2) et dont les sorties Q sont reliées aux entrées d'une disposition logique de majorité (48) prévue dans le circuit de commande du lieu de mesure et qui commande par ses signaux de sortie la disposition d'interrupteur (21) du lieu de mesure (5).

10. Disposition de mesure selon la revendication 9, caractérisée en ce que les entrées de données des différentes bascules D (45) de chacun des lieux de mesure (5) qui ne suit pas immédiatement le circuit sélecteur (15) peuvent être commandées individuellement, par l'intermédiaire d'un tronçon (26) d'un conducteur correspondant du câble (1), chacune par une sortie de la disposition logique de majorité (48) du point de mesure précédent (5), et en ce que les entrées de données des différentes bascules D (45) d'un lieu de mesure qui suit immédiatement le circuit sélecteur (15) peuvent être commandées conjointement, par l'intermédiaire d'un tronçon (26) d'un conducteur du câble (1), par la sortie Q de la bascule D (28) du circuit sélecteur (15).

11. Disposition de mesure selon la revendication 10, caractérisée en ce que la disposition d'organe basculeur bistable (45) de chacun des lieux de mesure (5) comprend cinq bascules D que l'on peut faire fonctionner parallèlement, et en ce que la disposition logique de majorité (48) est formée de cinq portes logiques de majorité 3 de 5.

12. Disposition de mesure selon l'une des revendications 9 et 10, caractérisée en ce que la disposition d'interrupteur (21) de chacun des lieux de mesure (5) est formée de plusieurs interrupteurs (52 à 57) qui sont branchés en au moins deux groupes parallèles entre eux, entre un conducteur (22, 23) du câble (1) établissant une liaison avec la source d'énergie (80) du central de commande et de mesure (2) et le capteur (20) du lieu de mesure (5), chacun des groupes comprenant plusieurs interrupteurs placés en série entre eux.

13. Disposition de mesure selon la revendication 12, caractérisée en ce que la disposition d'interrupteur (21) est formée de deux groupes parallèles entre eux dont chacun comprend trois interrupteurs reliés à la suite l'un de l'autre (52 à 57), et en ce que dans l'un des groupes chacun des interrupteurs (53, 54, 57) et dans l'autre groupe l'un des interrupteurs (52) peuvent être commandés individuellement par une sortie de la disposition logique de majorité (48), tandis que les entrées de commande des deux interrupteurs restants (55, 56) sont reliées conjointement à une cinquième sortie de la disposition logique de majorité (48).

14. Disposition de mesure selon l'une des revendications précédentes, caractérisée en ce que les dispositions d'interrupteur (21) sont formées d'interrupteurs à semiconducteur sans contact, et en ce que les dispositions d'interrupteur (21) de multiples lieux de mesure (5) sont rassemblées en sous-groupes par le fait que par leurs connexions non reliées au capteur correspondant (20), elles sont reliées à un tronçon (60) d'un conducteur du câble (1), qui peut être relié, par l'intermédiaire d'une disposition d'interrupteur (61) présentant donc un rang hiérarchique plus élevé, au conducteur (22, 23) du câble (1) qui amène l'énergie de mesure du central de commande et de mesure (2) ou retourne à celui-ci.

15. Disposition de mesure selon la revendication 14, caractérisée en ce que les dispositions d'interrupteur (61) de multiples sous-groupes sont rassemblées en groupes pas le fait que, par leurs connexions ne conduisant pas aux capteurs correspondants (20), elles sont reliées à un tronçon (62) d'un autre conducteur du câble (1) qui peut être relié, par l'intermédiaire d'une disposition d'interrupteur (63) présentant donc un rang hiérarchique encore plus élevé, au conducteur (22, 23) du câble (1) qui amène l'énergie de mesure du central de commande et de mesure (2) ou retourne à celui-ci.

16. Disposition de mesure selon les revendications 14 et 15, caractérisée en ce que chaque lieu de mesure (5) comprend trois dispositions d'interrupteur placées en série entre elles, dont l'une (21) appartient au plan hiérarchique le plus bas, la deuxième (61) au plan moyen et la troisième (63) au plan le plus haut, en ce que dans chaque tronçon de câble (7 à 13), au premier, $(n^2+1)$-ième, $(2n^2+1)$-ième, etc., lieu de mesure (5) suivant le circuit sélecteur correspondant, la connexion libre de la disposition d'interrupteur (63) présentant le rang hiérarchique le plus élevé est chaque fois raccordée, par l'intermédiaire d'une première liaison (68), au conducteur (22, 23) qui amène l'énergie de mesure du central de commande et de mesure (2) ou retourne à celui-ci, le point de liaison entre la disposition d'interrupteur (63) ayant le rang hiérarchique le plus élevé et la disposition d'interrupteur (61) ayant le rang hiérarchique moyen est raccordé par l'intermédiaire d'une deuxième liaison (67) au tronçon de conducteur correspondant (62) et le point de liaison entre la disposition d'interrupteur (61) ayant le rang hiérarchique moyen et la disposition d'interrupteur (21) ayant le rang hiérarchique le plus bas est raccordé par l'intermédiaire d'une troisième liaison (66) au tronçon de conducteur correspondant (60), en ce qu'à chaque $(n+1)$-ième, $(2n+1)$-ième, $(3n+1)$-ième etc., lieu de mesure (5), la première (68) de ces trois liaisons (66, 67, 68) est omise mais la deuxième (67) et la troisième (66) sont prévues, et en ce qu'à tous les autres lieux de mesure, seule la troisième liaison (66) est prévue, mais la première (68) et la deuxième (67) sont omises.

17. Disposition de mesure selon la revendication 16, caractérisée en ce que chaque lieu de mesure (5) comprend le circuit de commande, formé chaque fois au moins d'une disposition d'organe basculeur bistable (70, 71) pour les dispositions d'interrupteur (61, 63) des plans hiérarchiques moyen et plus élevé.

18. Disposition de mesure selon la revendication 17, caractérisée en ce que les dispositions d'organe basculeur bistable (70, 71) commandant les dispositions d'interrupteur (61, 63) des plans hiérarchiques moyen et plus élevé sont formées chacune de plusieurs bascules D fonctionnant parallèlement, dont les signaux de sortie peuvent être amenés aux entrées de commande des dispositions d'interrupteur (61, 63) par l'intermédiaire de dispositions logiques de majorité (72, 73), en ce que les entrées de données et de réarmement des bascules D formant les dispositions d'organe basculeur bistable (70, 71) pour les dispositions d'interrupteur (61, 63) des plans hiérarchiques moyen et plus élevé sont reliées aux entrées de données et de réarmement des bascules D formant la disposition d'organe basculeur bistable (45) pour la disposition d'interrupteur (21) du plan hiérarchique le plus bas, et en ce que les entrées de rythme des bascules D (71) pour les dispositions d'interrupteur (63) du plan hiérarchique le plus haut peuvent être commandées par les signaux de rythme de groupe venant du central de commande et de mesure sur un conducteur particulier (77) du câble (1) et les entrées de rythme des bascules D (70) pour la disposition d'interrupteur (61) du plan hiérarchique moyen, par les signaux de rythme de sous-groupe venant du central de commande et de mesure (2) sur un autre conducteur (75) du câble (1).

19. Disposition de mesure selon l'une des revendications précédentes, caractérisée en ce qu'au lieu de mesure (5) dont la disposition d'organe basculeur bistable (25; 45) forme chaque fois le dernier étage d'un registre à décalage, le capteur (20) est remplacé par une résistance fixe (29) dont la valeur de résistance se distingue nettement des valeurs de résistance pouvant être prises par les capteurs (20) dans la gamme de mesure prévue, et en ce que dans le central de commande et de mesure (2) est prévu un dispositif de manœuvre (87, 150, 153) déclenchant, à l'apparition d'une valeur mesurée correspondant à cette valeur de résistance nettement différente, le choix d'un nouveau tronçon de câble (7 à 13).

20. Disposition de mesure selon l'une des revendications précédentes, caractérisée en ce que la source d'énergie fournissant l'énergie de mesure pour le capteur chaque fois relié par sa disposition d'interrupteur (21) fermée aux conducteurs d'amenée et de retour (22, 23) du câble (1) est une source de courant constant disposée dans le central de commande et de mesure (2), qui est formée par une disposition de manœuvre (97, 98, 99, 100, 101) qui mesure le courant retournant du capteur chaque fois commandé (20) en passant par le conducteur correspondant (23) du câble (1) et le règle à une valeur constante prescrite.

21. Disposition de mesure selon la revendication 20, caractérisée en ce que la disposition de manœuvre réglant le courant de mesure est formée d'un amplificateur opérationnel (97) dont la première entrée est reliée par l'intermédiaire d'un diviseur de tension (98, 99, 100) à une tension de référence prescrite de façon fixe, dont la deuxième entrée est reliée au conducteur (23) du câble (1) qui ramène le courant de mesure des capteurs (20) et, par l'intermédiaire d'une résistance fixe (101), à la masse du système, et dont la sortie alimente le conducteur (22) du câble (1) qui amène le courant de mesure aux capteurs (20), par un courant dont l'intensité est réglée à une valeur telle que lorsqu'il reflue en passant par le conducteur (23), il engendre sur la résistance fixe (101) la même chute de tension que prend, sur le diviseur de tension (98, 99, 100), la première entrée de l'amplificateur opérationnel (97).

22. Disposition de mesure selon la revendication 21, caractérisée en ce qu'il est prévu un amplificateur différentiel (81) à grande inhibition de signal de même rythme, engendrant, en partant de la différence de tension entre la sortie et la deuxième entrée de l'amplificateur opérationnel (97), une valeur mesurée destinée à être traitée ensuite, en ce qu'entre le point de mesure (MP2) relié à la deuxième entrée de l'amplificateur opérationnel (97) et l'entrée correspondante de l'amplificateur différentiel (81) est branché un convertisseur d'impédance (101) présentant l'amplification «un», dont la résistance de sortie correspond à peu près à la résistance de sortie de l'amplificateur opérationnel (97), et en ce qu'à la suite de l'amplificateur différentiel (81) est branché un organe formateur de différence (106) déduisant du signal de mesure une valeur de socle qui peut être prescrite de façon fixe.

23. Disposition de mesure selon l'une des revendications précédentes, caractérisée en ce qu'il est prévu une mémoire intermédiaire (82) reprenant le résultat de mesure avant l'interprétation qui suit, et en ce que la mémoire intermédiaire (82) peut être commandée par l'unité de manœuvre (120) engendrant le signal de rythme de lieu de mesure, de telle sorte qu'elle ne reprend le résultat de mesure que si la disposition d'interrupteur (21) du capteur (20) dont il s'agit est complètement fermée avec certitude.

FIG.1

F I G. 2

ANWAHL-STELLEN-TAKT

MESSTELLEN-TAKT

RESET

I-AUS

I-RÜCK

P1 P2 ... Pm PE TAKT
Rückwärts-Zähler
Q1 Q2 ... Qm "O"

VERZ

16
15
30
31
34
35
28
26
27
17
32
22
23
25
5
21
20
29

# FIG. 3

0 043 431

FIG. 4

FIG. 5

FIG.6

0 043 431

FIG.7

STEUEREINHEIT — 84

32 LEITUNGS-RESET

17 MESS-STELLEN-TAKT

16 ANWAHLSTELLEN-TAKT

KONSTANT-STROMQUELLE — 80

95

22 I-AUS

23 I-RÜCK

SOLLWERT-SPEICHER — 90

KOMPA-RATOR — 87

A/D-WANDLER ANALOG-EING. — 88

ANALOG-SPEICHER — 82

81

85

93
92
91

FIG. 8

FIG.9

# F I G. 10

0 043 431